(19) **Europäisches Patentamt**
**European Patent Office**
**Office européen des brevets**

(11) **EP 3 606 242 B1**

(12) **EUROPEAN PATENT SPECIFICATION**

(45) Date of publication and mention
of the grant of the patent:
**09.02.2022 Bulletin 2022/06**

(21) Application number: **18877889.8**

(22) Date of filing: **05.11.2018**

(51) International Patent Classification (IPC):
**H04W 72/04** (2009.01)     **H04L 5/00** (2006.01)

(52) Cooperative Patent Classification (CPC):
**H04L 1/0003; H04L 1/0016; H04L 5/0044;**
**H04L 5/0091; H04W 72/04;** H04L 1/0009;
H04L 5/0005

(86) International application number:
**PCT/CN2018/113996**

(87) International publication number:
**WO 2019/096022 (23.05.2019 Gazette 2019/21)**

(54) **DATA TRANSMISSION METHOD AND APPARATUS**

DATENÜBERTRAGUNGSVERFAHREN UND -VORRICHTUNG

PROCÉDÉ ET APPAREIL DE TRANSMISSION DE DONNÉES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **17.11.2017   CN 201711188610**

(43) Date of publication of application:
**05.02.2020 Bulletin 2020/06**

(73) Proprietor: **Huawei Technologies Co., Ltd.**
**Longgang District**
**Shenzhen, Guangdong 518129 (CN)**

(72) Inventors:
• **WANG, Ting**
**Shenzhen**
**Guangdong 518129 (CN)**
• **TANG, Hao**
**Shenzhen**
**Guangdong 518129 (CN)**
• **TANG, Zhenfei**
**Shenzhen**
**Guangdong 518129 (CN)**
• **WANG, Yi**
**Shenzhen**
**Guangdong 518129 (CN)**
• **CAO, Yongzhao**
**Shenzhen**
**Guangdong 518129 (CN)**

• **ZENG, Xin**
**Shenzhen**
**Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(56) References cited:
WO-A1-2014/056131     WO-A1-2017/063193
CN-A- 102 196 495     CN-A- 107 306 453

• HUAWEI ET AL: "DL/UL resource allocation and
TB size determination", 3GPP DRAFT;
R1-1717078, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE , vol. RAN
WG1, no. Prague, Czech Republic; 20171009 -
20171013 2 October 2017 (2017-10-02),
XP051352184, Retrieved from the Internet:
URL:http://www.3gpp.org/ftp/tsg_ran/WG1_RL
1/TSGR1_90b/Docs/ [retrieved on 2017-10-02]

**(Cont. next page)**

- **LG ELECTRONICS: "Discussion on resource allocation and TBS determination", 3GPP DRAFT; R1-1717965 DISCUSSION ON RESOURCE ALLOCATION AND TBS DETERMINATION_VF, 3RD GENERATION PARTNERSHIP PROJECT (3GPP), MOBILE COMPETENCE CENTRE ; 650, ROUTE DES LUCIOLES ; F-06921 SOPHIA-ANTIPO , vol. RAN WG1, no. Prague, CZ; 20171009 - 20171013 3 October 2017 (2017-10-03), XP051352846, Retrieved from the Internet: URL:http://www.3gpp.org/ftp/tsg_ran/WG1_RL 1/TSGR1_90b/Docs/ [retrieved on 2017-10-03]**
- **ERICSSON: "On MCS/Transport Block Size Determination for PDSCH", 3GPP TSG-RAN WG1 Meeting #89, RI-1709093, vol. RAN WG1, 7 May 2017 (2017-05-07), - 19 May 2017 (2017-05-19), XP051263358,**

**Description**

**TECHNICAL FIELD**

This application relates to the communications field, and in particular, to a data transmission method and apparatus in the communications field.

**BACKGROUND**

Before sending data on a transmission resource, a transmit end and a receive end need to encode the data, and during the encoding, need to determine a transport block size and the like of the data sent on the transmission resource. In a future network system, data scheduling will be more flexible, and different transport block sizes may be required in different scenarios. Therefore, an urgent problem to be resolved in future network requirements is to determine a transport block size to improve reliability of data transmission. Huawei et al, "DL/UL resource allocation and TB size determination", vol. RAN WG1, no. Prague, Czech Republic; 20171009 - 20171013, (20171002), 3GPP DRAFT; R1-1717078 discusses how to calculate the transport block. LG Electronics, "Discussion on resource allocation and TBS determination", vol. RAN WG1, no. Prague, CZ; 20171009 - 20171013, (20171003), 3GPP DRAFT; R1-1717965 also discusses how to calculate the transport block. CN 107 306 453 A discloses a method and a device for generating a transport block. WO 2017/063193 A1 discloses a transport block size determining method enabling the use of the existing transport block size table to determine the size of transport blocks. WO 2014/056131 A1 discloses a data transmission control method and a device. CN 102 196 495 A discloses a downlink data transmission method for improving data transmission reliability and saving airinterface resources. Ericsson, "On MCS/Transport Block Size Determination for PDSCH", 3GPP TSG-RAN WG1 Meeting #89; R1-1709093, 2017-05-19, proposes a TBS determination method supporting flexible PDSCH transmission duration.

**SUMMARY**

This application provides a data transmission method according to independent claim 1 and apparatus according to independent claim 5, to improve accuracy of determining a transport block size and help improve reliability of data transmission. Additional features of the invention are provided in the dependent claims. In the following, parts of the description and drawings referring to embodiments which are not covered by the claims are not presented as embodiments of the invention, but as examples useful for understanding the invention.

**BRIEF DESCRIPTION OF DRAWINGS**

FIG. 1 is a schematic diagram of a communications system to which an embodiment of this application is applied;
FIG. 2 is a schematic diagram of a bandwidth resource in a system bandwidth according to an embodiment of this application;
FIG. 3 is a schematic diagram of a data transmission method according to an embodiment of this application;
FIG. 4 is a schematic diagram of another data transmission method according to an embodiment of this application;
FIG. 5 is a schematic diagram of still another data transmission method according to an embodiment of this application;
FIG. 6 is a schematic diagram of still another data transmission method according to an embodiment of this application;
FIG. 7 is a schematic diagram of a code rate, a transport block size, and a code block size according to an embodiment of this application;
FIG. 8 is a schematic diagram of a data transmission apparatus according to an embodiment of this application; and
FIG. 9 is a schematic diagram of another data transmission apparatus according to an embodiment of this application.

**DESCRIPTION OF EMBODIMENTS**

It should be understood that, the technical solutions of the embodiments of this application may be applied to various communications systems, such as: a global system for mobile communications (global system of mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communications system, a wireless local area network (wireless local area network, WLAN) system, a future fifth generation wireless communications system (the fifth generation, 5G), or another future communications system.

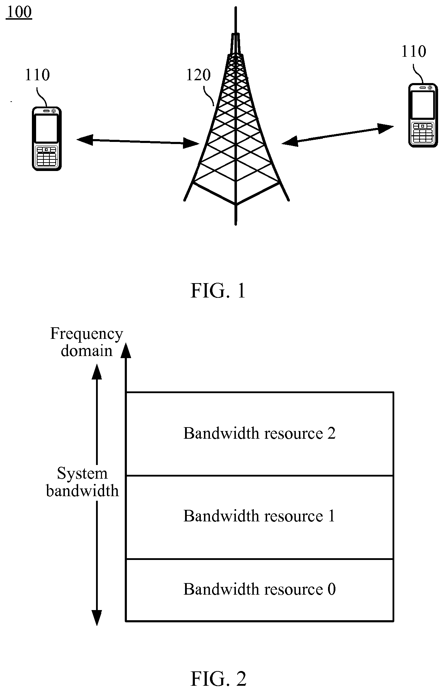

FIG. 1 shows a communications system 100 to which an embodiment of this application is applied. The communications system 100 may include a terminal device 110 and a network device 120. The terminal device 110 in the embodiments of this application may be user equipment, an access terminal, a subscriber unit, a subscriber station, a mobile station, a mobile console, a remote station, a remote terminal, a mobile device, a user terminal, a terminal, a wireless communications device, a user agent, or a user apparatus. The terminal device may also be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (public land mobile network, PLMN). This is not limited in the embodiments of this application.

The network device 120 in the embodiments of this application may be a device configured to communicate with the terminal device 110, and the network device may be a base transceiver station (base transceiver station, BTS) in a GSM or CDMA system, or may be a NodeB (NodeB, NB) in a WCDMA system, or may be an evolved NodeB (evolutional NodeB, eNB, or eNodeB) in an LTE system, or may be a radio controller in a cloud radio access network (cloud radio access network, CRAN) scenario; or the network device may be a relay station, an access point, a vehicle-mounted device, a wearable device, or a device that communicates with the terminal device in a future 5G network, or a device that communicates with the terminal device in a future evolved PLMN network, or the like. This is not limited in the embodiments of this application.

It should be understood that, there may be one or more terminal devices 110, and the embodiments of this application are described by using only one terminal device as an example. Optionally, in the embodiments of this application, the communications device may be a terminal device or a network device, or the communications device may be a chip. This is not limited in the embodiments of this application.

It should be understood that the embodiments of this application may be applied to a single-cell transmission scenario, a coordinated multipoint transmission/reception (coordinated multiple points transmission/reception, CoMP) scenario, a dual connectivity communication (dual communication, DC) scenario, a homogeneous network scenario, a heterogeneous network scenario, or the like. The embodiments of this application may also be applied to a low-frequency scenario, a high-frequency scenario, or the like. In the CoMP scenario, a plurality of discrete network devices jointly participate in transmitting physical downlink shared channel (physical downlink sharing channel, PDSCH) data of the terminal device, or jointly receive physical uplink shared channel (physical uplink sharing channel, PUSCH) data sent by the terminal device, or a plurality of network devices perform coordinated scheduling or coordinated beamforming. For example, a plurality of network devices in one cell jointly transmit data for the terminal device, or a plurality of network devices in different cells jointly transmit data for the terminal device. In the CoMP scenario, a plurality of cells or a plurality of network devices may transmit data for the terminal device at a same frequency. In the DC scenario, a plurality of cells or a plurality of network devices may transmit data for the terminal device at different frequencies.

When the network device and the terminal device communicate on the bandwidth resource, the data transmitted on the bandwidth resource needs to be encoded based on the transport block size on the bandwidth resource. A manner of determining the transport block size is: determining a TBS index in an MCS table based on an MCS index, and then determining the TBS in a TBS table based on the TBS index. The MCS table is shown in Table 1. The first column of the MCS table represents an MCS index, the second column represents a modulation order, and the third column represents a TBS index. When receiving an MCS index 0 sent by the network device, the terminal device finds a TBS index 0 corresponding to the MCS index 0, and then finds a TBS table with the TBS index 0, such as Table 2.

**Table 1**

| MCS index ($I_{MCS}$) | Modulation order ($Q_m$) | TBS index ($I_{TBS}$) |
| --- | --- | --- |
| 0 | 4 | 0 |

Table 2 is a TBS table corresponding to a TBS index. The network device sends indication information to the terminal device by using downlink control information, where the indication information is used to indicate an MCS index and $N_{PRB}$. In this way, when the terminal device obtains the MCS index and a quantity $N_{PRB}$ of physical resource blocks, the terminal device finds the TBS index 0 from Table 1 based on the MCS index, and then finds, from Table 2 based on $N_{PRB}$ determined according to the indication information sent by the network device, a transport block size corresponding to $N_{PRB}$. The terminal device transmits data based on the transport block size. For example, the network device sends the indication information by using downlink control information, and the terminal device determines that $N_{PRB}$ is 4 according to the indication information, and then finds a transport block size 88 from Table 2. Alternatively, after the transport block size is determined by using the foregoing method, a transport block size on a corresponding transmission resource is determined by multiplying different percentages based on subframe characteristics in different data transmissions. The subframe characteristic in data transmission may indicate at least one of a downlink subframe, an uplink subframe, or a special subframe. The special subframe is a subframe that includes both an uplink symbol and a downlink symbol.

With development of future networks, different bandwidth resources may have different available resources. For example, different transmission resources require different quantities of pilot resources, overheads, and/or the like. In this way, transport block sizes on different transmission resources are different. For example, the quantity of pilot resources may be a size of a transmission resource occupied by a pilot, for example, the size of the transmission resource occupied by the pilot is represented by a resource element quantity. For example, for a data demodulation reference signal (demodulation reference signal, DMRS), the quantity of pilot resources may be a quantity of resource elements occupied by the DMRS. The overhead may be a quantity of resource elements not used to transmit service data, or the overhead may be a quantity that is of resource elements not used to transmit service data and that is not the resource element (resource element, RE) quantity for the DMRS. If such a method for determining the transport block size is used, a same MCS index and same $N_{PRB}$ are possibly configured for different transmission resources. Consequently, the transport block sizes on the different transmission resources are the same. For example, if a quantity of pilots and/or overheads on a bandwidth resource 1 are larger, fewer resources are available for data transmission, and a transport block size on the bandwidth resource 1 is smaller. If a quantity of pilots and/or overheads on a bandwidth resource 2 are smaller, more resources are available for data transmission, and a transport block size on the bandwidth resource 2 is larger. When the terminal device transmits data on the bandwidth resource 1 and the bandwidth resource 2, if scheduling information of the terminal device indicates a same MCS index and same $N_{PRB}$, the transport block size that is on the bandwidth resource 1 and that is determined by the terminal device is the same as the transport block size that is on the bandwidth resource 2 and that is determined by the terminal device. However, the transport block sizes that are on the bandwidth resource 1 and the bandwidth resource 2 and that are determined in this manner are not transport block sizes that are determined by considering actual resource element quantities for the bandwidth resource 1 and the bandwidth resource 2. This affects reliability of data transmission, and leads to relatively poor system performance. For example, the determined transport block size may be greater than a quantity of available resources of the bandwidth resource 2, and consequently, a quantity of bits for error correction coding on the bandwidth resource 2 decreases, and transmission performance during data transmission is relatively poor. In addition, because the transport block size determined based on the MCS index and $N_{PRB}$ is a transport block size determined for an entire system bandwidth, a unified transport block size is determined for the entire system bandwidth. In a plurality of bandwidth resources included in the system bandwidth, different bandwidth resources may correspond to different transport block sizes. Consequently, the transport block size cannot be effectively determined based on the MCS index and $N_{PRB}$, affecting reliability of data transmission.

**Table 2**

| $I_{TBS}$ | $N_{PRB}$ | | | | | | | |
|---|---|---|---|---|---|---|---|---|
| | 1 | 2 | 3 | 4 | 5 | 6 | 7 | 8 |
| 0 | 16 | 32 | 56 | 88 | 120 | 152 | 176 | 208 |

To resolve the foregoing problem, an embodiment of this application provides a data transmission method. A bandwidth resource may correspond to configuration information that is used to determine a transport block size, and different bandwidth resources may correspond to different configuration information that is used to determine transport block sizes. In this way, a transport block size corresponding to each bandwidth resource can be determined for the bandwidth resource, thereby improving accuracy of determining the transport block size and further improving reliability of data transmission.

The terms used in the embodiments of this application are explained below.

1. First bandwidth resource: A first bandwidth resource may include at least one consecutive subcarrier. A network device may configure, for a terminal device, a first bandwidth resource in a plurality of bandwidth resources of a system bandwidth. To be specific, the system bandwidth may include a plurality of bandwidth resources, and the first bandwidth resource is one of the plurality of bandwidth resources. The network device schedules the terminal device in the configured first bandwidth resource. The first bandwidth resource may be a consecutive or nonconsecutive part of the system bandwidth. For example, the first bandwidth resource may be referred to as a bandwidth part (bandwidth part, BWP), a carrier bandwidth part (carrier bandwidth part), a frequency resource part, a part of frequency resources, or another name. When the first bandwidth resource is a section of consecutive resources in the system bandwidth, the first bandwidth resource may also be referred to as a subband (subband), a narrowband (narrowband), or another name. For example, FIG. 2 is a schematic diagram of a bandwidth resource in a system bandwidth. The system bandwidth includes a total of three different bandwidth resources: a bandwidth resource 0, a bandwidth resource 1, and a bandwidth resource 2. The first bandwidth resource may be one of the bandwidth resource 0, the bandwidth resource 1, and the bandwidth resource 2. In actual application, the system bandwidth may include M bandwidth resources, where M is an integer greater than or equal to 2. For different bandwidth resources such as a bandwidth resource A and a bandwidth resource B, a frequency of the bandwidth resource A and a frequency of the bandwidth resource B may partially or fully overlap, or may not overlap at all. For example, in a communications system based on an orthogonal frequency division multiplexing (orthogonal frequency division multiplexing, OFDM) technology, at least one subcarrier included in the bandwidth resource A is not included in the bandwidth resource B, or at least one subcarrier included in the bandwidth resource B is not included in the bandwidth resource A. Alternatively, a frequency domain resource of the bandwidth resource A fully overlaps that of the bandwidth resource B, but frame structures (such as a subcarrier spacing or a CP length) of the bandwidth resource A and the bandwidth resource B are different, or the like. This is not limited in the embodiments of this application.

2. A transport block size (transport block size, TBS) is used to indicate a quantity of bits occupied by a transport block.

In a possible implementation, for example, a transport block size $TBS_1$ may be obtained through a formula (1):

$$TBS_1 = N_{PRB} \cdot \widetilde{N}_{RE} \cdot Q_m \cdot R \quad (1)$$

where $N_{PRB}$ is a quantity of physical resource blocks (resource block, RB), and may be a quantity of allocated RBs, or may be a quantity of RBs obtained by quantization based on a reference RE quantity, or may be a quantity of resource block groups (resource block group, REG). Specifically, the quantity of RBs may be predefined, or may be notified by the network device to the terminal device. This is not limited in the embodiments of this application. Certainly, the quantity of RBs may also be multiplied by a quantity of units, such as a quantity of slots, a quantity of symbols, or the like, in time domain. That $N_{PRB}$ may also be obtained by quantization based on a reference RE quantity means that: if the quantity of RBs configured by the network device for a resource is N and a total quantity of available REs in the N RBs is N*M, and if the reference RE quantity is R, the quantity of RBs obtained by quantization based on the reference RE quantity may be a quantity of RBs obtained by calculating N*M/R, where M, N, and R are positive integers, and M, N, and R may be the same or different. Optionally, an operation such as rounding up or rounding down may be performed during specific calculation. This is not specifically limited in the embodiments of this application.

$\tilde{N}_{RE}$ is an RE quantity. Specifically, the RE quantity may be an RE quantity determined based on a time-frequency resource for data transmission, or may be a reference RE quantity obtained by quantization based on the RE quantity determined based on the time-frequency resource for data transmission. The reference RE quantity may be the RE quantity applicable to the formula for calculating $TBS_1$. The reference RE quantity may be configured by the network device, and/or may be a reference RE quantity obtained by quantization based on available REs. The reference RE quantity may be a quantity of reference REs in a slot of a resource block (the resource block may be only a frequency domain concept, for example, may be 12 subcarriers), or may be a quantity of reference REs in a symbol of a resource block, or may be a quantity of reference REs of $N_1$ PRBs and $M_1$ symbols, or may be a quantity of reference REs of $N_2$ PRBs and $M_2$ slots, or may be a quantity of reference REs of $N_3$ PRBs and $M_3$ symbols, or may be a quantity of reference REs of $N_4$ PRBs and $M_4$ slots. Specifically, the reference RE quantity may be predefined, or may be notified by the network device to the terminal device. This is not limited in the embodiments of this application. $N_1$, $N_2$, $N_3$, $N_4$, $M_1$, $M_2$, $M_3$, and $M_4$ are positive integers. $N_1$, $N_2$, $N_3$, $N_4$, $M_1$, $M_2$, $M_3$, and $M_4$ may be the same or different.

$Q_m$ is a modulation order, for example, quadrature phase shift keying (quadrature phase shift keying, QPSK), 16 quadrature amplitude modulation (Quadrature Amplitude Modulation) QAM, or 64QAM.

R is a code rate. The TBS calculated based on the code rate may be a TBS that includes a quantity of cyclic redundancy check (cyclic redundancy check, CRC) bits or may be a TBS that includes no quantity of CRC bits.

Optionally, the TBS calculated based on the code rate may be a transport block size that includes either or both of a quantity of transport block CRC bits and a quantity of code block CRC bits, or may be a transport block size that includes neither a quantity of transport block CRC bits nor a quantity of code block CRC bits.

This is not specifically limited herein. A specific code rate may be predefined, or may be notified by the network device to the terminal device. This is not limited in the embodiments of this application.

In a possible implementation, for example, a transport block size $TBS_2$ may be obtained through formulas (2) to (5):

$$TBS_{temp} = N_{RE} * R * Q_m * \upsilon \quad (2)$$

$$N_{RE} = \overline{N}'_{RE} * N_{PRB} \quad (3)$$

$$N'_{RE} = N^{RB}_{RE} * N^{slot}_{symb} - N^{PRB}_{DMRS} - N^{PRB}_{oh} \quad (4)$$

$$\text{if } C>1, \quad TBS_2 = ceil\left(\frac{TBS_{temp} + C*L_{TB-CRC}}{lcm(C,8)}\right) \cdot lcm(C,8) - L_{TB-CRC} - C*L_{TB-CRC} \,;$$

or

$$\text{if } C=1, \quad TBS_2 = ceil\left(\frac{TBS_{temp}}{lcm(C,8)}\right) \cdot lcm(C,8) - L_{TB-CRC} \quad (5)$$

where $Q_m$ is a modulation order, R is a code rate, $\upsilon$ is a quantity of transmission layers, $TBS_{temp}$ is a TBS size, $N_{RE}$ is an RE quantity derived from a quantized reference RE quantity ($\overline{N}'_{RE}$) and $N_{PRB}$, $N_{PPB}$ is a quantity of RBs, $L_{CB\text{-}CRC}$ is a quantity of code block CRC bits, and $L_{TB\text{-}CR}$ is a quantity of transport block CRC bits. It should be understood that when C>1 and C=1, $TBS_2$ may be calculated through the formula (5). $N^{RB}_{RE} = 12$ is a quantity of subcarriers of a resource block in frequency domain. $N^{slot}_{symb}$ is a quantity of symbols in a slot during data transmission, $N^{PRB}_{DMRS}$ is a resource element quantity for DMRSs in each resource block, and $N^{PRB}_{oh}$ is an overhead. $N_{PRB}$ is a quantity of allocated resource blocks, that is, a quantity of resource blocks for data transmission. $\overline{N}'_{RE}$ (which may be referred to as a quantized reference RE quantity) is a reference RE quantity determined based on $N'_{RE}$ (an RE quantity before quantization). In the foregoing formula (1), $\tilde{N}_{RE}$ may be $\overline{N}'_{RE}$ or $N'_{RE}$. This is not limited in the embodiments of this application.

$TBS_2$ is the transport block size before a cyclic redundancy check (cyclic redundancy check, CRC) bit is added. $ceil(\cdot)$ means rounding up, and $lcm(\cdot)$ means calculating a least common multiple. $L_{TB\text{-}CRC}$ is the quantity of transport block CRC bits, for example, may be 24. C is a quantity of code blocks.

It should be understood that in actual application, both the formula (1) and the formula (2) are methods for determining the transport block size, and primarily differ in that the formula (1) includes no quantity of transmission layers, but the formula (2) includes a quantity of transmission layers. When the quantity of transmission layers in the formula (2) is 1, $TBS_{temp}=TBS_1$. Similarly, $TBS_{temp}$ in the formula (5) may be replaced by $TBS_1$. In the embodiments of this application, data may be transmitted based on $TBS_1$, or based on $TBS_{temp}$, or based on $TBS_2$. For example, when $TBS_1$ is obtained, $TBS_{temp}$ in the formula (5) may be replaced by $TBS_1$ to obtain $TBS_2$, so that the data is transmitted by using $TBS_2$; when $TBS_{temp}$ is obtained, $TBS_2$ can be obtained based on the formula (5), so that the data is transmitted by using $TBS_2$; when $TBS_2$ is obtained, the data is transmitted by using $TBS_2$ directly. In other words, the target transport block size in the embodiments of this application may be $TBS_1$, , $TBS_{temp}$, or $TBS_2$. This is not limited in the embodiments of this application.

Optionally, the target transport block size in the embodiments of this application may be a transport block size that includes either or both of a quantity of transport block CRC bits and a quantity of code block CRC bits, or may be a transport block size that includes neither a quantity of transport block CRC bits nor a quantity of code block CRC bits.

3. A resource element quantity may be a reference RE quantity, or may be a quantity of resource elements not used to transmit service data. In this case, the quantity of resource elements not used to transmit service data may be referred to as an overhead; or the resource element quantity may be a quantity that is of resource elements not used to transmit service data and that is not the RE quantity for the DMRS. In this case, the quantity that is of resource elements not used to transmit service data and that is not the RE quantity for the DMRS may also be referred to as an overhead. Optionally, the overhead may be determined by considering a resource element quantity of at least one of a channel state information-reference signal (channel state information-reference signal, CSI-RS), a phase tracking reference signal (phase tracking reference signal, PTRS), a control resource set (control resource set, CORESET), a synchronization signal block (synchronization signals block, SS block), a physical broadcast channel (physical broadcast channel, PBCH), or the like; or the overhead may be determined by considering transmission of other signals and/or channels, for example, by considering at least one of system compatibility, transmission of a special service, and uplink/downlink handover. This is not limited in the embodiments of this application.

4. Modulation and coding scheme (modulation and coding scheme, MCS) table: An MCS table may include an MCS index, a modulation order, or a code rate, for example, may include at least one row shown in Table 3 or Table 4. When the MCS index is obtained, the modulation order and the code rate corresponding to the MCS index may be determined based on the MCS index. Optionally, the MCS table may include an MCS index and a modulation order, for example, may include elements in at least one row shown in Table 5. When the MCS index is obtained, the modulation order corresponding to the MCS index may be determined based on the MCS index. Optionally, the MCS table is used to determine the modulation order (for example, Table 5), or determine the modulation order and the code rate (for example, Table 4 or Table 5).

5. Code rate table: A code rate table may include a code rate index and a code rate, for example, may include elements in at least one row shown in Table 6. When the code rate index is obtained, the corresponding code rate is determined based on the code rate index. Optionally, the code rate table is used to determine the code rate (for example, Table 6).

**Table 3**

| MCS index | Modulation order | Code rate |
|---|---|---|
| 0 | 2 | 0.53 |
| 1 | 2 | 0.6 |
| 2 | 2 | 0.68 |
| 3 | 2 | 0.73 |
| 4 | 2 | 0.75 |
| 5 | 2 | 0.78 |
| 6 | 2 | 0.86 |
| 7 | 2 | 0.93 |

**Table 4**

| MCS index (MCS Index) | Modulation order (Modulation Order) | Code rate R (Code rate R) $\times$ 1024 |
|---|---|---|
| 0 | 2 | 120 |
| 1 | 2 | 193 |
| 2 | 2 | 308 |
| 3 | 2 | 449 |
| 4 | 2 | 602 |
| 5 | 4 | 378 |
| 6 | 4 | 434 |
| 7 | 4 | 490 |
| 8 | 4 | 553 |
| 9 | 4 | 616 |
| 10 | 4 | 658 |
| 11 | 6 | 466 |

(continued)

| MCS index (MCS Index) | Modulation order (Modulation Order) | Code rate R (Code rate R) × 1024 |
|---|---|---|
| 12 | 6 | 517 |
| 13 | 6 | 567 |
| 14 | 6 | 616 |
| 15 | 6 | 666 |
| 16 | 6 | 719 |
| MCS index (MCS Index) | Modulation order (Modulation Order) | Code rate R (Code rate R) ×1024 |
| 17 | 6 | 772 |
| 18 | 6 | 822 |
| 19 | 6 | 873 |
| 20 | 8 | 682.5 |
| 21 | 8 | 711 |
| 22 | 8 | 754 |
| 23 | 8 | 797 |
| 24 | 8 | 841 |
| 25 | 8 | 885 |
| 26 | 8 | 916.5 |
| 27 | 8 | 948 |
| 28 | 2 | Reserved value (reserved) |
| 29 | 4 | Reserved value |
| 30 | 6 | Reserved value |
| 31 | 8 | Reserved value |

**Table 5**

| MCS index | Modulation order |
|---|---|
| 0 | 2 |
| 1 | 4 |
| 2 | 8 |
| 3 | 16 |

**Table 6**

| Code rate index | Code rate |
|---|---|
| 0 | 0.3 |
| 1 | 0.4 |
| 2 | 0.5 |
| 3 | 0.6 |

A data transmission method according to an embodiment of this application is described in detail below with reference to the accompanying drawings.

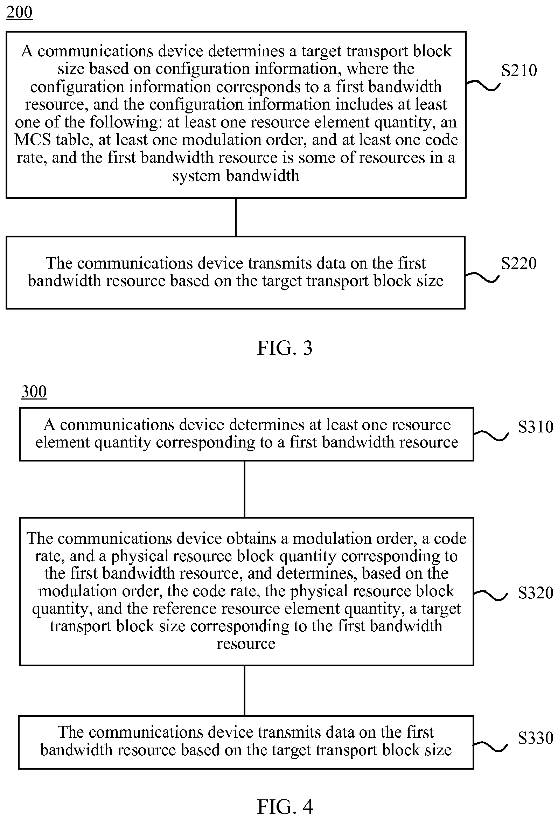

FIG. 3 shows a data transmission method 200 according to an embodiment of this application. The method 200 includes the following steps.

S210. A communications device determines a target transport block size based on configuration information, where the configuration information corresponds to a first bandwidth resource, and the configuration information includes at least one of the following: at least one resource element quantity, an MCS table, at least one modulation order, and at least one code rate.

In this embodiment, the first bandwidth resource may be some of resources in a system bandwidth.

When the configuration information includes a plurality of resource element quantities, it is considered that the plurality of resource element quantities form a resource element quantity set, and the communications device may select one resource element quantity from the resource element quantity set as a resource element quantity for determining the transport block size.

Optionally, when the configuration information includes a modulation order, it is considered that the modulation order is a modulation order for determining the transport block size; or when the configuration information includes a plurality of modulation orders, it is considered that the plurality of modulation orders form a modulation order set, and the communications device may select a modulation order from the modulation order set as a modulation order for determining the transport block size.

Optionally, when the configuration information includes a code rate, it is considered that the code rate is a code rate for determining the transport block size; or when the configuration information includes a plurality of code rates, it is considered that the plurality of code rates form a code rate set, and the communications device may select a code rate from the code rate set as a code rate for determining the transport block size.

Optionally, specific configuration information in this embodiment of this application includes at least one of the following: at least one resource element quantity, an MCS table, at least one modulation order, and at least one code rate. Specifically, whether the configuration information includes a value or a set is not limited.

The configuration information may be obtained in at least one of the following manners:

In a first manner, when the communications device is a terminal device, the communications device receives the configuration information sent by a network device.

The configuration information includes at least one of the following: at least one resource element quantity, an MCS table, at least one modulation order, and at least one code rate.

Optionally, the configuration information may be included in indication information sent by the network device to the terminal device. For example, the network device may send indication information to the communications device, where the indication information is used to indicate the configuration information.

Optionally, when the communications device is a network device, the network device sends configuration information to the terminal device.

Optionally, the configuration information may be included in indication information of the first bandwidth resource. When receiving the indication information, the terminal may determine the configuration information, and further determine, based on the configuration information, at least one of the following corresponding to the first bandwidth resource: at least one resource element quantity, an MCS table, at least one modulation order, and at least one code rate.

In a second manner, the communications device may obtain the configuration information based on a frequency domain location of the first bandwidth resource.

For example, the frequency domain location of the first bandwidth resource may be a frequency domain characteristic of the first bandwidth resource. This is not limited in this embodiment of this application.

For example, the frequency domain characteristic may be at least one of: a center frequency location of the first bandwidth resource, a frequency location of the first bandwidth resource, or bandwidth information of the first bandwidth resource. This is not limited in this embodiment of this application.

Optionally, there may be a correspondence between the frequency domain location of the first bandwidth resource and at least one of the resource element quantity, the MCS table, the modulation order, or the code rate. The communications device may determine the configuration information based on the frequency domain location of the first bandwidth resource and the correspondence.

Specifically, for example, the correspondence may be at least one of: a correspondence between one frequency domain location and one or more resource element quantities, a correspondence between one frequency domain location and one MCS table, a correspondence between one frequency domain location and one or more modulation orders, or a correspondence between one frequency domain location and one or more code rates.

Optionally, the correspondence may be a correspondence between a plurality of frequency domain locations and at least one of a resource element quantity, an MCS table, a modulation order, a code rate, or the like. This is not limited in this embodiment of this application.

Optionally, the communications device may first obtain the frequency domain location of the first bandwidth resource, and then, determine, based on the correspondences, at least one of the resource element quantity, the MCS table, the modulation order, the code rate, and the like corresponding to the frequency domain location of the first bandwidth resource.

Optionally, the communications device may obtain the configuration information based on the frequency domain location of the first bandwidth resource. For example, bandwidth resources in different frequency domains may correspond to different configuration information, and the different configuration information may differ in at least one of an MCS table, a resource element quantity, a modulation order, or a code rate.

In a third manner, the communications device may obtain the configuration information based on a time domain location of the first bandwidth resource.

For example, the time domain location of the first bandwidth resource may be a subcarrier spacing and/or a cyclic prefix (cyclic prefix, CP) length of the first bandwidth resource. This is not limited in this embodiment of this application.

Optionally, the time domain location may be a frame structure characteristic of the first bandwidth resource, such as a quantity of uplink/downlink switching points in a frame structure.

Specifically, there may be a correspondence between a time domain location of a bandwidth resource and at least one of a resource element quantity, an MCS table, a modulation order, or a code rate.

Optionally, the correspondence may be at least one of: a correspondence between one time domain location and one or more resource element quantities, a correspondence between one time domain location and one MCS table, a correspondence between one time domain location and one or more modulation orders, or a correspondence between one time domain location and one or more code rates.

Optionally, the correspondence may be a correspondence between a plurality of time domain locations and at least one of a resource element quantity, an MCS table, a modulation order, a code rate, or the like. This is not limited in this embodiment of this application.

Optionally, the communications device may first obtain the time domain location of the first bandwidth resource, and then determine, based on the correspondences, at least one of the resource element quantity, the MCS table, the modulation order, or the code rate, and the like corresponding to the time domain location of the first bandwidth resource. Optionally, the communications device may obtain the configuration information based on a time domain of the first bandwidth resource. For example, bandwidth resources in different time domains may correspond to different configuration information, and the different configuration information may differ in at least one of an MCS table, a resource element quantity, a modulation order, or a code rate.

In a fourth manner, the communications device may obtain the configuration information based on a scheduling manner of the first bandwidth resource.

Specifically, there may be a correspondence between a scheduling manner of a bandwidth resource and at least one of a resource element quantity, an MCS table, a modulation order, or a code rate. For example, one scheduling manner corresponds to one or more resource element quantities; and/or one scheduling manner corresponds to one MCS table; and/or one scheduling manner corresponds to one or more modulation orders; and/or one scheduling manner corresponds to one or more code rates.

Optionally, the communications device may first obtain the scheduling manner of the first bandwidth resource, and then determine, based on the correspondences, at least one of the resource element quantity, the MCS table, the modulation order, the code rate, or the like corresponding to the scheduling manner of the first bandwidth resource. For example, the scheduling manner is semi-static scheduling or grant-free scheduling. The scheduling manner may also be referred to as a scheduling mode. For example, there are a plurality of scheduling modes, and different scheduling modes correspond to different configuration information. This is not limited in this embodiment of this application.

Optionally, the scheduling manner may be at least one of slot-based (slot-based) scheduling, non-slot based (non-slot based) scheduling, slot aggregation (slot aggregation), or multi-slot scheduling.

In a fifth manner, the communications device may obtain the configuration information based on a service type of data to be transmitted on the first bandwidth resource.

Optionally, the service type may be a type of data transmission, for example, at least one of an enhanced mobile broadband (enhanced mobile broadband, eMBB) service, an ultra-reliable and low latency communications (ultra-reliable and low latency communications, URLLC) service, a voice service, or a video service.

The following describes an example of obtaining the configuration information based on the service type of the data to be transmitted on the first bandwidth resource.

For example, there may be a correspondence between a service type of data to be transmitted on the first bandwidth resource and at least one of a resource element quantity, an MCS table, a modulation order, or a code rate. For example, one service type corresponds to one or more resource element quantities; and/or one service type corresponds to one MCS table; and/or one service type corresponds to one or more modulation orders; and/or one service type corresponds to one or more code rates.

For example, different service types of the data transmitted on the first bandwidth resource may correspond to a same resource element quantity or different resource element quantities; and/or different service types of the data transmitted on the first bandwidth resource may correspond to a same MCS table or different MCS tables; and/or different service types of the data transmitted on the first bandwidth resource may correspond to a same modulation order or different modulation orders; and/or different service types of the data transmitted on the first bandwidth resource may correspond to a same code rate or different code rates.

Optionally, when data of a plurality of service types is transmitted on the first bandwidth resource, the transport block size may be determined by selecting configuration information corresponding to the plurality of service types. For example, a service type 1 and a service type 2 are simultaneously transmitted on the first bandwidth resource, the service type 1 corresponds to a resource element quantity 1, and the service type 2 corresponds to a resource element quantity 2, and therefore, the transport block size on the first bandwidth resource may be determined based on the resource element quantity 1 and the resource element quantity 2 separately.

In a sixth manner, the communications device may determine the configuration information based on uplink control information transmitted on the first bandwidth resource.

Optionally, the communications device may determine the configuration information depending on whether the data transmitted on the first bandwidth resource includes signaling (the signaling may also be referred to as control information).

Optionally, the signaling may be an uplink control channel or uplink control information. For example, during uplink data transmission, a terminal may use a data channel to carry the uplink control channel (or the uplink control information).

For example, when signaling is transmitted on the first bandwidth resource, the first bandwidth resource corresponds to one resource element quantity set, and when no signaling is transmitted on the first bandwidth resource, the first bandwidth resource corresponds to another resource element quantity set, that is, the first bandwidth resource may correspond to two resource element quantity sets; and/or when signaling is transmitted on the first bandwidth resource, the first bandwidth resource corresponds to one MCS table, and when no signaling is transmitted on the first bandwidth resource, the first bandwidth resource corresponds to another MCS table, that is, the first bandwidth resource may correspond to two MAC tables; and/or when signaling is transmitted on the first bandwidth resource, the first bandwidth resource corresponds to one code rate set, and when no signaling is transmitted on the first bandwidth resource, the first bandwidth resource corresponds to another code rate set, that is, the first bandwidth resource may correspond to two code rate sets; and/or when signaling is transmitted on the first bandwidth resource, the first bandwidth resource corresponds to one modulation order set, and when no signaling is transmitted on the first bandwidth resource, the first bandwidth resource corresponds to another modulation order set, that is, the first bandwidth resource may correspond to two modulation order sets.

Optionally, when the data transmitted on the first bandwidth resource includes signaling, the configuration information may be determined based on a format and/or a bit size of the signaling.

For example, one format of signaling transmitted on the first bandwidth resource corresponds to one or more resource element quantities; and/or one format of signaling transmitted on the first bandwidth resource corresponds to one MCS table; and/or one format of signaling transmitted on the first bandwidth resource corresponds to one or more modulation orders; and/or one format of signaling transmitted on the first bandwidth resource corresponds to one or more code rates.

For example, when the size of the signaling transmitted on the first bandwidth resource is M bits, the first bandwidth resource corresponds to one resource element quantity set, and when the size of the signaling transmitted on the first bandwidth resource is N bits, the first bandwidth resource corresponds to another resource element quantity set; and/or when the size of the signaling transmitted on the first bandwidth resource is M bits, the first bandwidth resource corresponds to one MCS table, and when the size of the signaling transmitted on the first bandwidth resource is N bits, the first bandwidth resource corresponds to another MCS table; and/or when the size of the signaling transmitted on the first bandwidth resource is M bits, the first bandwidth resource corresponds to one modulation order set, and when the size of the signaling transmitted on the first bandwidth resource is N bits, the first bandwidth resource corresponds to another modulation order set; and/or when the size of the signaling transmitted on the first bandwidth resource is M bits, the first bandwidth resource corresponds to one code rate set, and when the size of the signaling transmitted on the first bandwidth resource is N bits, the first bandwidth resource corresponds to another code rate set. It should be understood that the M bits and the N bits herein are used for ease of description, and in actual application, may be a range of the size of the signaling transmitted on the first bandwidth resource, where different ranges correspond to different configuration information. It should also be understood that the set herein may be understood as a concept of including one or more elements. This is not limited in this embodiment of this application.

Optionally, the correspondence in this embodiment of this application may be predefined, or may be notified by a network device to a terminal device by using signaling. This is not limited in this embodiment of this application.

Specifically, for example, the communications device may determine the target transport block size based on the configuration information in at least one of the following manners.

In a first manner, when the configuration information includes at least one resource element quantity, and when the resource element quantity is a reference RE quantity, a reference RE quantity corresponding to the first bandwidth resource may be obtained in the foregoing manner.

Optionally, when the configuration information includes one resource element quantity, and when the resource element quantity may be a reference RE quantity, it may be determined that the reference RE quantity is the reference RE quantity for determining the transport block size.

When the configuration information includes a plurality of resource element quantities, and when the plurality of resource element quantities are a plurality of reference RE quantities, a plurality of reference RE quantities corresponding to the first bandwidth resource may be obtained in the foregoing manner, and then one reference RE quantity may be determined in the plurality of reference RE quantities, where the reference RE quantity is the reference RE quantity for determining the target transport block size.

For example, one of the plurality of reference RE quantities may be randomly selected as the reference RE quantity for determining the target transport block size; or, one reference RE quantity may be determined in the plurality of reference RE quantities based on an overhead or the like corresponding to the first bandwidth resource and used as the reference RE quantity for determining the target transport block size; or a first RE quantity may be determined based on an overhead in a resource block on the first bandwidth resource, and a reference RE quantity closest to the first RE quantity is selected from the plurality of reference RE quantities as the reference RE quantity for determining the target transport block size. Alternatively, a first RE quantity may be determined based on an overhead on the first bandwidth resource, and a reference RE quantity closest to and less than the first RE quantity is determined in the plurality of reference RE quantities and used as the reference RE quantity for determining the target transport block size; or a reference RE quantity closest to and greater than the first RE quantity is determined in the plurality of reference RE quantities and used as the reference RE quantity for determining the target transport block size. This is not limited in this embodiment of this application. Assuming that the transport block size is calculated through the formula (1) or the formulas (2) to (5), the reference RE quantity may be determined by using the method in this embodiment of this application, and then $N_{PRB}$, the modulation order, the code rate, and the like are obtained based on the control information, and the target transport block size is calculated.

In this embodiment of this application, "closest" may mean a closest value, that is, a value that shows a smallest difference.

Optionally, $N_{PRB}$, the reference RE quantity, and the code rate may be obtained by using the method in this embodiment of this application, or by using another method, for example, may be indicated by the control information or predefined. This is not specifically limited in this application.

For example, the modulation order and the code rate are obtained based on an MCS index indicated by the control information, and $N_{PRB}$ is obtained according to a resource indication in the control information, and then the communications device determines the target transport block size based on the modulation order, the code rate, $N_{PRB}$, and the reference RE quantity.

Optionally, the target transport block size may be determined based on the reference RE quantity, the MCS index (or the modulation order and the code rate), $N_{PRB}$, and a TBS table.

Specifically, the method for determining the reference RE quantity may be at least one of the following solutions. The solution may be an independent embodiment, or may be combined with another embodiment in this application. This is not specifically limited in this application.

In this embodiment of this application, if the first bandwidth resource corresponds to one reference RE quantity set, assuming that a plurality of reference RE quantity sets exist, the reference RE quantity set corresponding to the first bandwidth resource may be determined in the plurality of reference RE quantity sets. For example, the reference RE quantity set corresponding to a transport block size of transmitted data may be determined in the plurality of reference RE quantity sets based on a characteristic of the data.

Optionally, the plurality of reference RE quantity sets may be at least two reference RE quantity sets, and each set may include one or more reference RE quantities.

Optionally, the plurality of reference RE quantity sets may be predefined in a protocol, or may be notified by the network device to the terminal device by using signaling. This is not limited in this embodiment of this application.

Optionally, the reference RE quantity may be a quantity of reference REs in a slot of a resource block (the resource block is only a frequency domain concept, for example, 12 subcarriers), where, for example, the resource block may include 12 subcarriers and the slot may include 14 symbols.

For example, the reference RE quantity set may include at least one of the following:

The reference RE quantity set is at least one value in a set 12* {1, 2, 3, 4, 5, 6, 7, 8, 9, 10, 11, 12, 13, 14}, where 12 represents a quantity of subcarriers.

For example, the set may be at least one of 12* {2, 4, 5, 6, 8, 10, 11, 12}, or 12*{1, 2, 4, 5, 6, 8, 10, 12}, or 12*{1, 2, 3, 4, 5, 6, 7}.

The reference RE quantity set is at least one value in another set 8* {1, 2, 3, 4, 5, 6, 7, 8, 9, 10, 11, 12, 13, 14, 15, 16, 17, 18, 19, 20, 21], where 8 represents a quantity of subcarriers.

For example, the set may be at least one of 8*{1, 2, 3, 4, 5, 6, 7}, or 8*{2, 4, 5, 6, 8, 10, 11, 12}, or 8*{1, 2, 4, 5, 6, 8, 10, 12}.

Alternatively, the set may also be a set that includes other values. This is not specifically limited herein.

Optionally, the reference RE quantity set may be determined in a plurality of reference RE quantity sets based on the characteristic of the data, and the target transport block size may be determined based on a reference RE quantity in the reference RE quantity set.

The characteristic of the data may be at least one of the service type of the data, a data scheduling method, a quantity of time units for data scheduling, or a detection period of a control channel on which the data is located, or may be another characteristic of the data. This is not limited in this embodiment of this application.

Optionally, the service type of the data may be at least one of an eMBB service, a URLLC service, a voice service, a video service, or the like, or may be another service type. This is not limited in this embodiment of this application.

Optionally, the data scheduling method may be at least one of slot-based (slot-based) scheduling, non-slot based (non-slot based) scheduling, slot aggregation (slot aggregation) scheduling, semi-static scheduling, dynamic scheduling, or semipersistent scheduling. For example, the slot-based scheduling may use a slot as a scheduling period, the non-slot based scheduling may have a scheduling period shorter than a slot length, or the non-slot based scheduling may have a scheduling period longer than a slot length. The data scheduling method may also be another scheduling method. This is not limited in this embodiment of this application.

Optionally, the quantity of time units for data scheduling may be a quantity of time units occupied by the data, and may be a specific value or a specific interval. The time unit may be a basic unit for data scheduling, such as at least one of a symbol, a slot, a subframe, or a radio frame.

Optionally, the detection period of the control channel on which the data is located may be at least one of a detection period of the control channel, a detection period of a search space, or a detection period of a control channel resource set. For example, the detection period may be one or more symbols, or may be one or more slots, or another detection period. This is not limited in this embodiment of this application.

Optionally, the determining the reference RE quantity set in a plurality of reference RE quantity sets based on the characteristic of the data may be: determining the reference RE quantity set based on a correspondence between the characteristic of the data and the reference RE quantity set.

Specifically, for example, a characteristic A of the data may correspond to a reference RE quantity set 1, and a characteristic B of the data may correspond to a reference RE quantity set 2. Therefore, when determining the characteristic of the data, the terminal device or the network device may determine the reference RE quantity set based on the correspondence between the characteristic of the data and the reference RE quantity set.

The following describes an example in which the characteristic of the data is a data scheduling method. For other characteristics of the data, the principle is similar. This is not limited in this embodiment of this application.

Specifically, for example, the reference RE quantity set corresponding to the slot-based scheduling is 12*{2, 4, 5, 6, 8, 10, 11, 12}, and the reference RE quantity set corresponding to the non-slot based scheduling is 12*{1, 2, 3, 4, 5, 6, 7}. The foregoing sets are only examples, and the reference RE quantity set may also be another set, and no specific limitation is imposed.

Specifically, for example, when the service type of the data is an eMBB service, the corresponding reference RE quantity set is 12*{2, 4, 5, 6, 8, 10, 11, 12}; and when the service type of the data is a URLLC service, the corresponding reference RE quantity set is 8*{1, 2, 3, 4, 5, 6, 7}. The foregoing sets are only examples, and the reference RE quantity set may also be another set, and no specific limitation is imposed.

Optionally, after determining the reference RE quantity set, the network device and/or the terminal device may determine a reference RE quantity in the determined reference RE quantity set.

Specifically, the reference RE quantity may be determined in the reference RE quantity set based on a time-frequency resource and/or an overhead for data scheduling.

Optionally, the reference RE quantity may be determined by using the determining method in this embodiment of this application, or by using another method. The determining method is not specifically limited herein.

For example, one reference RE quantity may be randomly selected from the reference RE quantity set as the reference RE quantity for determining the target transport block size; or one reference RE quantity may be determined in the reference RE quantity set based on the an overhead or the like corresponding to the first bandwidth resource and used as the reference RE quantity for determining the target transport block size; or a first RE quantity may be determined based on an overhead in a resource block on the first bandwidth resource, and a reference RE quantity closest to the first RE quantity is selected from the reference RE quantity set as the reference RE quantity for determining the target transport block size. Alternatively, a first RE quantity may be determined based on the overhead on the first bandwidth resource, and a reference RE quantity closest to and less than the first RE quantity is determined in the plurality of reference RE quantities and used as the reference RE quantity for determining the transport block size; or a reference RE quantity closest to and greater than the first RE quantity is determined in the plurality of reference RE quantities and used as the reference RE quantity for determining the target transport block size.

Specifically, the following solution may be used to determine the target transport block size based on the reference RE quantity, the MCS index (or the modulation order and the code rate), $N_{PRB}$, and a TBS table. The solution may be an independent embodiment, or may be combined with another embodiment in this application. Specifically, this is not limited in this embodiment of this application.

Optionally, a value in the TBS table may be determined based on the reference RE quantity, the MCS index (or a modulation scheme and the code rate), and $N_{PRB}$.

Optionally, the target transport block size may be determined based on the reference RE quantity, the MCS index (or the modulation scheme and the code rate), $N_{PRB}$, and the TBS table.

Optionally, a corresponding TBS can be found from the TBS table based on the reference RE quantity, the MCS index (or the modulation scheme and the code rate), and $N_{PRB}$.

Optionally, the TBS table may be predefined in a protocol. For example, at least one value in Table 7 and Table 8 below may be predefined in a protocol.

Specifically, an example of the TBS table is given below. The values in the table are only examples, and other values may also be applicable, and the specific values are not limited.

Optionally, the modulation scheme and the code rate may be replaced by an MCS index. This is not limited herein in this embodiment of this application.

Optionally, values in Table 7 and Table 8 may be $TBS_2$ calculated through the following formulas (2) to (5). Table 7 shows a relationship between $Q_m$, $R$, $\upsilon$, $N_{PRB}$, $TBS_2$, and $Y$. Currently in actual application, the parameter $\upsilon$ may be absent, for example, in Table 8. In addition, $Q_m$ and R in Table 7 and Table 8 may be replaced by an MCS index. This is not limited in this embodiment of this application.

In such parameters, Y may be the reference RE quantity. In the example given in the following table, values of $N_{PRB}$ are 8 and 10, and values of the reference RE quantity are 24, 48, 60, and 72. The modulation order 2 represents a QPSK modulation scheme, the modulation order 4 represents 16QAM, and so on. The values in Table 7 and Table 8 are only examples, and other values may be used. Specific values are not limited herein.

**Table 7**

| $Q_m$ | $R* 1024$ | $\upsilon$ | $TBS_2$ | | | | | | | | | |
|---|---|---|---|---|---|---|---|---|---|---|---|---|
| | | | $N_{PRB} = 8$ | | | | | $N_{PRB} = 10$ | | | | |
| | | | Y=24 | Y=48 | Y=60 | Y=12 | ... | Y=24 | Y=48 | Y=60 | Y=72 | ... |
| 2 | 120 | 1 | 24 | 72 | 96 | 112 | ... | 40 | 96 | 120 | 152 | ... |
| ... | ... | ... | ... | ... | ... | ... | ... | ... | ... | ... | ... | ... |
| 4 | 378 | 1 | 264 | 544 | 688 | 832 | ... | 336 | 688 | 864 | 1040 | ... |
| ... | ... | ... | ... | ... | ... | ... | ... | ... | ... | ... | ... | ... |
| 6 | 466 | 1 | 472 | 968 | 1216 | 1464 | ... | 632 | 1288 | 1616 | 1944 | ... |
| ... | ... | ... | ... | ... | ... | ... | ... | ... | ... | ... | ... | ... |
| 8 | 682. 5 | 1 | 1000 | 2024 | 2536 | 3048 | ... | 1256 | 2536 | 3176 | 3816 | ... |
| ... | ... | ... | ... | ... | ... | ... | ... | ... | ... | ... | ... | ... |

**Table 8**

| $Q_m$ | $R* 1024$ | $TBS_2$ | | | | | | | | | |
|---|---|---|---|---|---|---|---|---|---|---|---|
| | | $N_{PRB} =8$ | | | | | $N_{PRB} =10$ | | | | |
| | | Y=24 | Y=48 | Y=60 | Y=72 | ... | Y=24 | Y=48 | Y=60 | Y=72 | ... |
| 2 | 120 | 24 | 72 | 96 | 112 | ... | 40 | 96 | 120 | 152 | ... |
| ... | ... | ... | ... | ... | ... | ... | ... | ... | ... | ... | ... |
| 4 | 378 | 264 | 544 | 688 | 8 32 | ... | 336 | 688 | 864 | 1040 | ... |
| ... | ... | ... | ... | ... | ... | ... | ... | ... | ... | ... | ... |
| 6 | 466 | 472 | 968 | 1216 | 1464 | ... | 632 | 1288 | 1616 | 1944 | ... |
| ... | ... | ... | ... | ... | ... | ... | ... | ... | ... | ... | ... |

(continued)

| $Q_m$ | $R*1024$ | $TBS_2$ | | | | | | | | | |
|---|---|---|---|---|---|---|---|---|---|---|---|
| | | $N_{PRB}=8$ | | | | | $N_{PRB}=10$ | | | | |
| | | $Y=24$ | $Y=48$ | $Y=60$ | $Y=72$ | ... | $Y=24$ | $Y=48$ | $Y=60$ | $Y=72$ | ... |
| 8 | 682.5 | 1000 | 2024 | 2536 | 3048 | ... | 1256 | 2536 | 3176 | 3816 | ... |
| ... | ... | ... | ... | ... | ... | ... | ... | ... | ... | ... | ... |

In a second manner, the configuration information includes at least one resource element quantity, and the resource element quantity is a quantity of resource elements not used to transmit data.

Optionally, the quantity of resource elements not used to transmit data may also be referred to as an overhead.

Specifically, the resource element quantity may be an overhead. The overhead may be a quantity of resource elements not used to transmit service data, or the overhead may be a quantity that is of resource elements not used to transmit service data and that is not the RE quantity for the DMRS.

The overhead may be determined by considering a resource element quantity of at least one of a CSI-RS, a PTRS, a CORESET, an SS block, a PBCH, or the like; or the overhead may be determined by considering transmission of other signals and/or channels, for example, by considering at least one of system compatibility, transmission of a special service, and uplink/downlink handover. Specifically, this is not limited in this embodiment of this application.

Optionally, when the configuration information includes one resource element quantity, and when the resource element quantity is an overhead, it may be determined that the overhead is an overhead for determining the target transport block size. Optionally, the reference RE quantity may be further determined based on the overhead.

Optionally, when the configuration information includes a plurality of resource element quantities, and when the plurality of resource element quantities are a plurality of overheads, the plurality of overheads corresponding to the first bandwidth resource may be obtained in the foregoing manner, and then one overhead is determined in the plurality of overheads and used as an overhead for determining the target transport block size and may be further used as a basis for determining the reference RE quantity.

For example, one overhead may be randomly selected from the plurality of overheads as the overhead for determining the transport block size; or one overhead may be determined in the plurality of overheads based on a resource element quantity of pilots on a resource block, and used as the overhead for determining the transport block size. For example, there is a correspondence between the resource element quantity of pilots and overheads. Based on the resource element quantity of pilots on the resource block on the first bandwidth resource, one of the plurality of overheads is determined and used as the overhead for determining the target transport block size.

Optionally, there is a correspondence between the overhead and the reference RE quantity. In this case, the overhead corresponding to the first bandwidth resource may be obtained in the foregoing manner, and then the reference RE quantity on the first bandwidth resource may be determined based on the correspondence between the overhead and the reference RE quantity.

The reference RE quantity in this embodiment of this application may be a quantized reference RE quantity. For example, the reference RE quantity may be $\tilde{N}_{RE}$ in the formula (1) or $\tilde{N}_{RE}$ in the formula (2). Certainly, in this embodiment of this application, an RE quantity may also be determined based on the overhead and a time-frequency resource for data transmission, and for example, may be referred to as an RE quantity before quantization. The RE quantity before quantization may also be $\tilde{N}_{RE}$ in the formula (1) or $N'_{RE}$ in the formula (4). This is described in detail below.

Optionally, the reference RE quantity may be determined based on the overhead and a time-frequency resource for data transmission. For example, a first RE quantity may be determined based on the overhead on the first bandwidth resource and the time-frequency resource for data transmission. One RE quantity that is closest to and less than the first RE quantity is determined in a plurality of RE quantities and used as an RE quantity for determining the transport block size; or one RE quantity that is closest to and greater than the first RE quantity is determined in a plurality of RE quantities and used as an RE quantity for determining the transport block size. The RE quantity in this process may be a RE quantity before quantization or a quantized reference RE quantity.

Assuming that the transport block size is calculated through the formula (1) or the formulas (2) to (5), the overhead may be obtained according to the method in this embodiment of this application and/or based on control information, and a reference RE quantity is determined based on a correspondence between the overhead and the reference RE quantity, and then the target transport block size is calculated based on the reference RE quantity, $N_{PRB}$, the modulation order, the code rate, and the like.

Optionally, $N_{PRB}$, the modulation order, and the code rate may be obtained by using the method in this embodiment of this application, or by using another method, for example, may be indicated by the control information or predefined. This is not specifically limited in this application.

16

For example, the modulation order and the code rate are obtained based on the MCS index indicated by the control information, and $N_{PRB}$ is obtained according to a resource indication in the control information, and the target transport block size is determined based on the modulation order, the code rate, $N_{PRB}$, and the obtained reference RE quantity (the reference RE quantity determined based on the overhead).

Optionally, the target transport block size may be determined based on the reference RE quantity (the reference RE quantity determined based on the overhead), the MCS index (or the modulation order and the code rate), $N_{PRB}$, and a TBS table. Specifically, this is not limited in this embodiment of this application.

Optionally, the target transport block size may be determined based on the overhead, the time-frequency resource for data transmission, and the MCS index (or the modulation order and the code rate). Specifically, an RE quantity (RE quantity before quantization) for data transmission may be determined based on the overhead and the time-frequency resource for data transmission, and then the target transport block size is determined based on the RE quantity for data transmission and the MCS index (or the modulation order and the code rate). That is, no quantization of the RE quantity is required, and no reference RE quantity is required.

Optionally, there may be a correspondence between the resource element quantity and the MCS table. For example, the MCS table may be determined based on the resource element quantity and the correspondence. For example, a first resource element quantity corresponds to an MCS table A, and a second resource element quantity corresponds to an MCS table B. When determining the resource element quantity, the communications device may determine the MCS table based on the correspondence between the resource element quantity and the MCS table.

Optionally, there may be a correspondence between the resource element quantity and the MCS table. For example, the resource element quantity may be determined based on the MCS table and the correspondence. For example, an MCS table A corresponds to a first resource element quantity, and an MCS table B corresponds to a second resource element quantity. When determining the MCS table, the communications device may determine the resource element quantity based on the correspondence between the MCS table and the resource element quantity.

For example, when obtaining the MCS table in the foregoing manner and/or according to an indication of the MCS table, the communications device may determine the resource element quantity based on the obtained MCS table. For example, when determining that the MCS table corresponding to the first bandwidth resource is the MCS table A, the communications device determines that the first bandwidth resource corresponds to the first resource element quantity; or when determining that the MCS table corresponding to the first bandwidth resource is the MCS table B, the communications device determines that the first bandwidth resource corresponds to the second resource element quantity.

In a third manner, when the configuration information includes at least one resource element quantity, the first bandwidth resource may correspond to a plurality of resource element quantities.

For example, the communications device may be a terminal device, and therefore, the communications device determines at least one resource element quantity in the plurality of resource element quantities based on uplink control information transmitted on the first bandwidth resource, where the uplink control information includes at least one of a positive acknowledgement, a negative acknowledgement, and channel state information.

S210 includes: determining, by the communications device, the target transport block size based on the at least one resource element quantity. For example, the communications device may determine at least one resource element quantity in a plurality of resource element quantities depending on whether uplink control information is transmitted on the first bandwidth resource.

In particular, the determined at least one resource element quantity is resource element quantities of different layers on the communications device, the determining, by the communications device, the target transport block size based on the at least one resource element quantity includes: determining, by the communication device, a transport block size corresponding to each of the at least one resource element quantity; and performing, by the communications device, a summation operation on the transport block size corresponding to each resource element quantity to obtain the target transport block size.

When a first layer of data is transmitted on the first bandwidth resource, if the first layer of data carries uplink control information, that is, the first layer of data is transmitted on the first bandwidth resource and the uplink control information is also transmitted on the first bandwidth resource, so that it may be determined that a transport block size of the first layer of data corresponds to the first resource element quantity; and/or when a second layer of data is transmitted on the first bandwidth resource, the second layer of data carries no uplink control information, that is, no uplink control information is transmitted when the second layer of data is transmitted on the first bandwidth resource, so that it may be determined that a transport block size of the second layer of data corresponds to the second resource element quantity. When the communications device simultaneously transmits the first layer of data and the second layer of data on the first bandwidth resource, the transport block size calculated based on the first resource element quantity and the transport block size calculated based on the second resource element quantity may be summed to obtain the target transport block size on the first bandwidth resource.

Optionally, the first layer of data and the second layer of data in this embodiment of this application are data on different corresponding layers when the terminal device performs multi-layer data transmission. For example, a transport block can be transmitted in a plurality of layers, that is, spatial multiplexing is performed. A spatial multiplexing technology is to split to-be-transmitted data into several data streams, where each data stream may also be referred to as a layer, and transmit the data streams on different antennas, thereby increasing a transmission rate of a system.

Optionally, a concept of layer herein may be a concept in a multiple-input multiple-output (multiple input multiple output, MIMO) system.

MIMO means that a plurality of transmit antennas and a plurality of receive antennas are used at a transmit end and a receive end respectively, so that signals are transmitted and received through the plurality of antennas at the transmit end and the receive end, and communication quality is improved. Through the MIMO technology, full use of spatial resources can be made, multiple-input multiple-output is implemented by using a plurality of antennas, and a system channel capacity can be exponentially increased without increasing a spectrum resource or transmit power of an antenna. With such obvious advantages, the MIMO technology is considered as a core technology of next-generation mobile communications.

For example, the communications device may determine at least one resource element quantity based on a bit size and/or a format of uplink control information transmitted on the first bandwidth resource.

If the first layer of data carries uplink control information of a first bit size when the first bandwidth resource transmits the first layer of data, the first resource element quantity corresponding to the transport block size of the first layer of data may be determined; and/or if the second layer of data carries uplink control information of a second bit size when the first bandwidth resource transmits the second layer of data, the second resource element quantity corresponding to the transport block size of the second layer of data may be determined. When the communications device simultaneously transmits the first layer of data and the second layer of data on the first bandwidth resource, the transport block size calculated based on the first resource element quantity and the transport block size calculated based on the second resource element quantity may be summed to obtain the target transport block size on the first bandwidth resource.

In a fourth manner, when the configuration information includes an MCS table, an MCS table corresponding to the first bandwidth resource is obtained in the foregoing manner.

Optionally, the MCS table includes a modulation order, for example, as shown in Table 5.

Assuming that the transport block size is calculated through the formula (1) or the formulas (2) to (5), the communications device may first obtain an MCS index, determine a modulation order in the MCS table based on the MCS index, and then calculate the target transport block size based on $N_{PRB}$, the reference RE quantity, and the code rate.

Optionally, $N_{PRB}$, the reference RE quantity, and the code rate may be obtained by using the method in this embodiment of this application, or by using another method, for example, may be indicated by the control information or predefined. This is not specifically limited in this application.

Specifically, for example, the reference RE quantity is determined according to the method in this application, the modulation order is obtained in the MCS table based on the MCS index indicated by the control information, the code rate is determined based on the control information, $N_{PRB}$ is obtained according to a resource indication in the control information, and the target transport block size is determined based on the modulation order, the code rate, $N_{PRB}$, and the obtained reference RE quantity.

Optionally, the target transport block size may be determined based on the reference RE quantity, the modulation order (determined in the MCS table based on the MCS index), the code rate, $N_{PRB}$, and a TBS table. Specifically, this is not limited in this embodiment of this application.

Optionally, the target transport block size may be determined based on the modulation order, an overhead, a time-frequency resource for data transmission, and the code rate, where the modulation order is determined in the MCS table based on the MCS index. Specifically, an RE quantity (RE quantity before quantization) for data transmission may be determined based on the overhead and the time-frequency resource for data transmission, and then the target transport block size is determined based on the RE quantity for data transmission, the MCS index, and the code rate. That is, no quantization of the RE quantity is required, and no reference RE quantity is required.

Optionally, the MCS table includes a modulation order and a code rate, for example, as shown in Table 3.

Assuming that the transport block size is calculated through the formula (1) or the formulas (2) to (5), the communications device may first obtain an MCS index, determine a modulation order and a code rate in the MCS table based on the MCS index, and then calculate the target transport block size based on $N_{PRB}$ and the reference RE quantity.

Optionally, a resource block quantity and the reference RE quantity may be obtained by using the method in this embodiment of this application, or by using another method, such as a method indicated by the control information or a predefined method. This is not specifically limited in this application.

Specifically, for example, the reference RE quantity is determined according to the method in this application, the modulation order and the code rate are obtained in the MCS table based on the MCS index indicated by the control information, $N_{PRB}$ is obtained according to a resource indication in the control information, and the target transport block size is determined based on the modulation order, the code rate, $N_{PRB}$, and the obtained reference RE quantity.

Optionally, the target transport block size may be determined based on the modulation order and the code rate, the reference RE quantity, $N_{PRB}$, and a TBS table, where the modulation order and the code rate are determined in the MCS table based on the MCS index. Specifically, this is not limited in this embodiment of this application.

Optionally, the transport block size may be determined based on the modulation order and the code rate, an overhead, and a time-frequency resource for data transmission, where the modulation order and the code rate are determined in the MCS table based on the MCS index. Specifically, this is not limited in this embodiment of this application.

Optionally, an RE quantity (RE quantity before quantization) for data transmission may be determined based on the overhead and the time-frequency resource for data transmission, and then the transport block size is determined based on the RE quantity for data transmission, and the MCS index. That is, no quantization of the RE quantity is required, and no reference RE quantity is required.

In a fifth manner, when the configuration information includes a modulation order, a modulation order corresponding to the first bandwidth resource is obtained in the foregoing manner.

Assuming that the transport block size is calculated through the formula (1) or the formulas (2) to (5), the modulation order may be obtained based on the foregoing method, and then the target transport block size may be calculated based on the reference RE quantity, the resource block quantity, the code rate, and the like.

Optionally, the resource block quantity, the reference RE quantity, and the code rate may be obtained by using the method in this embodiment of this application, or by using another method, for example, may be indicated by the control information or predefined. This is not specifically limited in this application.

Specifically, for example, the modulation order is determined according to the method in this application, the code rate is determined based on the control information, $N_{PRB}$ is obtained according to a resource indication in the control information, and the target transport block size is determined based on the modulation order, the code rate, $N_{PRB}$, and the obtained reference RE quantity.

Optionally, the target transport block size may be determined based on the reference RE quantity, the MCS index (or the modulation order and the code rate), $N_{PRB}$, and a TBS table. Specifically, this is not limited in this embodiment of this application.

Optionally, the transport block size may be determined based on the overhead, the time-frequency resource for data transmission, the modulation order, and the code rate. Specifically, an RE quantity (RE quantity before quantization) for data transmission may be determined based on the overhead and the time-frequency resource for data transmission, and then the transport block size is determined based on the RE quantity for data transmission, the modulation order, and the code rate. That is, no quantization of the RE quantity is required, and no reference RE quantity is required.

In the sixth manner, when the configuration information includes a code rate, a code rate corresponding to the first bandwidth resource is obtained in the foregoing manner.

Assuming that the transport block size is calculated through the formula (1) or the formulas (2) to (5), the code rate may be obtained based on the foregoing method, and then the target transport block size may be calculated based on the reference RE quantity, the resource block quantity, the modulation order, the code rate, and the like.

Optionally, $N_{PRB}$, the reference RE quantity, and the modulation order may be obtained by using the method in this embodiment of this application, or by using another method, for example, may be indicated by the control information or predefined. This is not specifically limited in this application.

Specifically, for example, the code rate is determined according to the method in this application, a modulation scheme is determined based on the control information, $N_{PRB}$ is obtained according to a resource indication in the control information, and the target transport block size is determined based on the modulation order, the code rate, $N_{PRB}$, and the obtained reference RE quantity.

Optionally, the target transport block size may be determined based on the reference RE quantity, the modulation order, the code rate, $N_{PRB}$, and a TBS table. Specifically, this is not limited in this embodiment of this application.

Optionally, the transport block size may be determined based on the overhead, the time-frequency resource for data transmission, the modulation order, and the code rate. Specifically, an RE quantity (RE quantity before quantization) for data transmission may be determined based on the overhead and the time-frequency resource for data transmission, and then the target transport block size is determined based on the RE quantity for data transmission, the modulation order, and the code rate. That is, no quantization of the RE quantity is required, and no reference RE quantity is required.

Optionally, in the fourth, fifth, and sixth manners, there may be a correspondence between the resource element quantity and at least one of the MCS table, the modulation order, or the code rate.

Optionally, the resource element quantity may be determined based on the MCS table.

For example, the MCS table A corresponds to the first resource element quantity, and the MCS table B corresponds to the second resource element quantity.

When obtaining the MCS table, the communications device may determine the resource element quantity corresponding to the first bandwidth resource based on the MCS table. For example, when determining that the MCS table corresponding to the first bandwidth resource is the MCS table A, the communications device determines that the resource element quantity corresponding to the first bandwidth resource is the first resource element quantity; and/or when determining that the MCS table corresponding to the first bandwidth resource is the MCS table B, the communications device determines that the resource element quantity corresponding to the first bandwidth resource is the second resource element quantity.

Optionally, the MCS table may be determined based on the resource element quantity.

For example, the first resource element quantity corresponds to the MCS table A, and the second resource element quantity corresponds to the MCS table B.

When obtaining the resource element quantity, the communications device may determine, based on the resource element quantity, that the MCS table corresponding to the first bandwidth resource is the MCS table A. For example, when determining that the resource element quantity corresponding to the first bandwidth resource is the first resource element quantity, the communications device determines that the MCS table corresponding to the first bandwidth resource is the MCS table A; or when determining that the resource element quantity corresponding to the first bandwidth resource is the second resource element quantity, the communications device determines that the MCS table corresponding to the first bandwidth resource is the MCS table B.

S220. The communications device transmits data on the first bandwidth resource based on the target transport block size.

For example, the target transport block size may be a sum of transport block sizes of N layers of data, and therefore, N layers of data may be transmitted on the first bandwidth resource.

Therefore, in the data transmission method provided in this embodiment of this application, the first bandwidth resource may correspond to a resource element, or may correspond to the MCS table. In this way, different transport block sizes may be determined for different bandwidth resources, thereby improving flexibility of determining the transport block size. In addition, the determined transport block size is more accurate, thereby helping improve reliability of data transmission and further improving system performance.

FIG. 4 shows another data transmission method 300 according to an embodiment of this application. The method 300 includes the following steps.

S310. A communications device determines at least one resource element quantity corresponding to a first bandwidth resource. Optionally, the communications device may be a terminal device or a network device.

The following describes an example in which the resource element quantity is a reference RE quantity.

Optionally, there may be different cases of sending a synchronization information block, a PBCH, a CSI-RS, or a DMRS on different bandwidth resources. For example, a synchronization information block or a PBCH exists on a bandwidth resource 1, but no synchronization information block or PBCH exists on a bandwidth resource 2, so that a reference RE quantity configured for the bandwidth resource 1 may be less than a reference RE quantity configured for the bandwidth resource 2. For another example, a CSI-RS density of the bandwidth resource 1 is higher and a CSI-RS occupies more REs, but a CSI-RS density of the bandwidth resource 2 is lower and a CSI-RS occupies fewer REs, so that a reference RE quantity configured for the bandwidth resource 1 may be less than a reference RE quantity configured for the bandwidth resource 2. For still another example, a DMRS on the bandwidth resource 1 occupies more REs, but a DMRS on the bandwidth resource 2 occupies fewer REs, so that a reference RE quantity configured for the bandwidth resource 1 may be less than a reference RE quantity configured for the bandwidth resource 2. For example, a quantity of reference REs in one physical resource block (the resource block may be only a frequency domain concept, for example, 12 subcarriers) in a slot of the bandwidth resource 1 may be configured to be 100, and a quantity of reference REs in one physical resource block in a slot of the bandwidth resource 2 may be configured to be 120. In this way, the communications device can determine the reference RE quantity based on actual conditions of signaling or pilots currently sent on the first bandwidth resource, thereby improving flexibility of determining a transport block size.

The following describes an example in which the resource element quantity is an overhead.

Optionally, overheads on different bandwidth resources are different, and there may be different cases of sending a synchronization information block, a PBCH, a CSI-RS, or a DMRS on different bandwidth resources. For example, a synchronization information block or a PBCH exists on a bandwidth resource 1, but no synchronization information block or PBCH exists on a bandwidth resource 2, so that an overhead configured for the bandwidth resource 1 may be greater than an overhead configured for the bandwidth resource 2. For another example, a CSI-RS density of the bandwidth resource 1 is higher and a CSI-RS occupies more REs, but a CSI-RS density of the bandwidth resource 2 is lower and a CSI-RS occupies fewer REs, so that an overhead configured for the bandwidth resource 1 may be greater than an overhead configured for the bandwidth resource 2. For still another example, a DMRS on the bandwidth resource 1 occupies more REs, and a DMRS on the bandwidth resource 2 occupies fewer REs, so that an overhead configured for the bandwidth resource 1 may be greater than an overhead configured for the bandwidth resource 2. For example, an overhead in one physical resource block (the resource block may be only a frequency domain concept, for example, 12 subcarriers) in a slot of the bandwidth resource 1 may be configured to be 120, and an overhead in one physical resource block in a slot of the bandwidth resource 2 may be configured to be 90. In this way, the communications device can determine the overhead based on actual conditions of signaling or pilots currently sent on the first bandwidth resource, thereby improving flexibility of determining a transport block size.

Optionally, when switching from the first bandwidth resource to a second bandwidth resource, the communications device may determine a quantity of reference resource elements on the second bandwidth resource based on a transmission status of data on the second bandwidth resource that is switched to.

Optionally, a reference RE quantity corresponding to each of P bandwidth resources may be predefined, where P is an integer greater than or equal to 2. For example, if a system bandwidth includes 10 bandwidth resources, reference RE quantities of five of the 10 bandwidth resources may be set to 120 by default, and reference RE quantities of the remaining five bandwidth resources may be determined in the manner in the method 200. This is not limited in this embodiment of this application.

Optionally, the bandwidth resource may be a BWP. When cross-BWP scheduling occurs, that is, when scheduling information in a BWP 1 is used to schedule data on a BWP 2 (the scheduling information exists on the BWP 1, and the data exists on the BWP 2), the resource element quantity for determining the transport block size may be a resource element quantity of the BWP 1 or a resource element quantity of the BWP 2.

To be specific, the resource element quantity for determining the transport block size may be the resource element quantity corresponding to the first bandwidth resource on which a control channel for data scheduling is located, or may be the resource element quantity corresponding to the second bandwidth resource on which the data is located. The specific selected resource element quantity corresponding to the bandwidth resource may be predefined in a protocol, or may be notified by a network device to a terminal device by using signaling. This is not specifically limited in this embodiment of this application.

For example, the reference RE quantity corresponding to the first bandwidth resource may be determined according to the method 200. For example, if a voice service is sent on the first bandwidth resource, the reference RE quantity corresponding to the first bandwidth resource may be Ns; if an enhanced mobile broadband (enhanced mobile broadband, eMBB) service is sent on the first bandwidth resource, the reference RE quantity corresponding to the first bandwidth resource may be $N_6$, where $N_5$ and $N_6$ are positive integers. Alternatively, the first bandwidth resource may correspond to a plurality of reference RE quantities, and different reference RE quantities on a same bandwidth resource are applicable to different services.

S320. The communications device obtains the modulation order, the code rate, and the quantity of physical resource blocks corresponding to the first bandwidth resource, and determines, based on the modulation order, the code rate, and the quantity of physical resource blocks, and the reference resource element quantity in S310, the target transport block size corresponding to the first bandwidth resource, for example, may determine the target transport block size based on the formula (1) or the formulas (2) to (5). Optionally, the communications device may obtain, based on an MCS index, the modulation order corresponding to the first bandwidth resource, and obtain the code rate according to a network indication, or may obtain, according to the method 200, the modulation order and the code rate corresponding to the first bandwidth resource. This is not limited in this embodiment of this application.

S330. The communications device transmits the data on the first bandwidth resource based on the target transport block size.

Therefore, in the data transmission method provided in this embodiment of this application, different bandwidth resources may correspond to different resource element quantities. In this way, different transport block sizes may be determined for different bandwidth resources, thereby improving flexibility of determining the transport block size. In addition, the determined transport block size is more accurate, thereby helping improve reliability of data transmission.

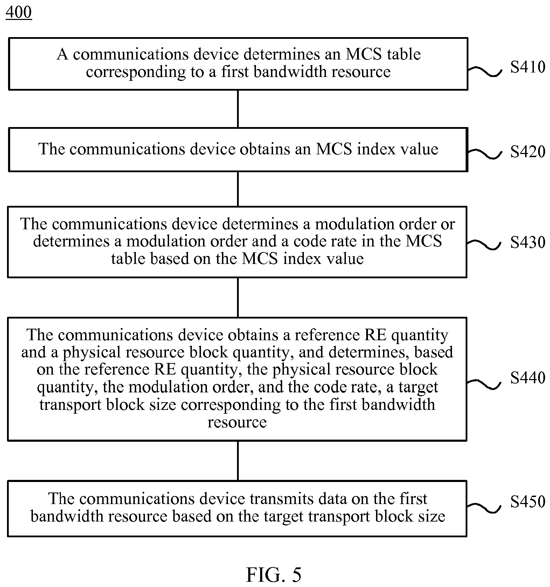

FIG. 5 shows another data transmission method 400 according to an embodiment of this application. The method 400 includes the following steps.

S410. A communications device determines an MCS table corresponding to a first bandwidth resource.

Optionally, the communications device may be a terminal device or a network device.

Specifically, different bandwidth resources may be used to send different service types, and different service types require different modulation schemes and/or code rates. Therefore, different bandwidth resources may correspond to different MCS tables (each MCS table may include a modulation order, or include a modulation order and a code rate). Different bandwidth resources may also correspond to different code rate tables (when the code rate is not included in the MCS tables, a table that includes the code rate may exist separately). For example, ultra-reliable and low latency communications (ultra-reliable and low latency communications, URLLC) services that require a relatively low code rate are transmitted on the first bandwidth resource, and eMBB services that partially require a high code rate and partially require a low code rate are transmitted on a second bandwidth resource, and therefore, the code rate in the MCS table or the code rate table corresponding to the first bandwidth resource is relatively low, for example, as shown in Table 9; and the code rates in the MCS table or the code rate table corresponding to the second bandwidth resource are partially high and partially low, for example, as shown in Table 4.

**Table 9**

| MCS index | Modulation order | Code rate |
|-----------|------------------|-----------|
| 0 | 2 | 0.3 |
| 1 | 2 | 0.4 |
| 2 | 2 | 0.5 |
| 3 | 4 | 0.2 |
| 4 | 4 | 0.3 |
| 5 | 4 | 0.4 |
| 6 | 8 | 0.2 |
| 7 | 8 | 0.3 |

Specifically, the MCS table may be determined in the manner in the method 200. For example, the MCS table may be determined based on a correspondence between a resource element quantity and the MCS table. For example, the corresponding resource element quantity of the first bandwidth resource is 100, and the corresponding MCS table is an MCS table 1; a corresponding resource element quantity of the second bandwidth resource is 120, and a corresponding MCS table is an MCS table 2. Therefore, when the resource element quantity of the first bandwidth resource is 100, the MCS table corresponding to the first bandwidth resource is Table 1; and when the resource element quantity of the first bandwidth resource is 120, the MCS table corresponding to the first bandwidth resource is Table 2. For a specific manner of determining the MCS table, refer to the method 200. To avoid repetition, examples are not given herein one by one.

S420. When the communications device obtains an MCS index. For example, when the communications device is a terminal device, the communications device may receive an MCS index sent by a network device by using downlink control information.

S430. The communications device determines a modulation order or determines a modulation order and a code rate in the MCS table based on the MCS index.

Optionally, in S410, the communications device determines a code rate table corresponding to the first bandwidth resource; in S420, the communications device may obtain a code rate index; and in S430, the communications device determines a code rate in the code rate table based on the code rate index.

S440. The communications device obtains a reference RE quantity and a physical resource block quantity, and determines, based on the reference RE quantity and the physical resource block quantity, the modulation order, and the code rate, a target transport block size corresponding to the first bandwidth resource.

S450. The communications device transmits data on the first bandwidth resource based on the target transport block size.

Therefore, in the data transmission method provided in this embodiment of this application, different bandwidth resources may correspond to different MCS tables, without requiring an entire system bandwidth to correspond to one MCS table. When the entire system bandwidth corresponds to one MCS table, a relatively large quantity of MCS indexes may exist. Assuming that the network device needs to indicate an MCS index by using downlink control information, overheads of the downlink control information are relatively large. In this embodiment of this application, different bandwidth resources may correspond to different MCS tables, thereby reducing overheads and improving system performance.

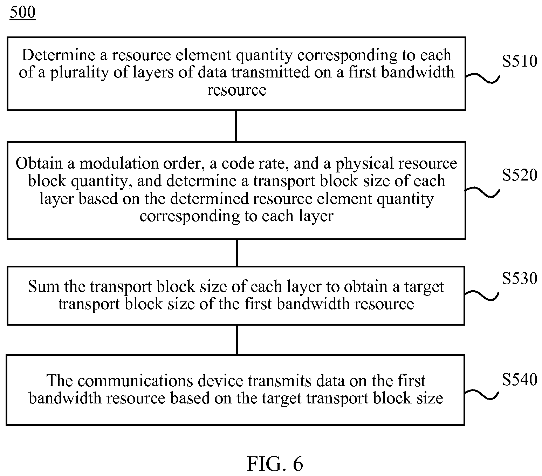

FIG. 6 shows another data transmission method 500 according to an embodiment of this application. The method 500 includes the following steps.

S510. Determine a resource element quantity (a reference RE quantity or an overhead) corresponding to each of a plurality of layers of data transmitted on a first bandwidth resource. For example, a layer for transmitting signaling corresponds to a resource element quantity 1, and a layer not for transmitting signaling corresponds to a resource element quantity 2. When two layers of data are transmitted on the first bandwidth resource, if a first layer of data carries signaling and a second layer of data carries no signaling, it can be determined that the first layer corresponds to the resource element quantity 1 and the second layer corresponds to the resource element quantity 2.

S520. Obtain a modulation order, a code rate, and a physical resource block quantity, and determine a transport block size of each layer based on the resource element quantity that is determined in S610 and that corresponds to each layer. It should be understood that the modulation orders, the code rates, and the same physical resource block quantities that correspond to the layers may be the same.

S530. Sum up the transport block size of each layer to obtain a target transport block size of the first bandwidth resource. For example, the target transport block size may be obtained through a formula (6), where *TBS* is the target transport block size, $N_{PRB}$ is the physical resource block quantity, $\tilde{N}_{RE,v}$ is a reference RE quantity of each layer, $Q_m$ is the modulation order, R is the code rate, V is a total quantity of layers of data transmitted on the first bandwidth resource, $N_{PRB}$, $Q_m$, and R of the layers may be the same, and certainly, $\tilde{N}_{RE,v}$ may also be replaced by $N_{RE}$:

$$TBS = \sum_{v=1}^{V} TBS_v = \sum_{v=1}^{V} N_{PRB} \cdot \widetilde{N}_{RE,v} \cdot Q_m \cdot R \quad (6)$$

S540. A communications device transmits data on the first bandwidth resource based on the target transport block size. For example, the communications device may encode the data based on the target transport block size to obtain encoded data, and transmit the encoded data on the first bandwidth resource.

It should be understood that the target transport block size herein may be $TBS_1$, $TBS_{temp}$, or $TBS_2$. However, a final transport block size of the transmitted data may be $TBS_2$. The following solutions may be used to obtain $TBS_2$ from $TBS_1$ or $TBS_{temp}$, where $TBS_2$ needs to be appropriate for segmentation of a code block. The solutions may form independent embodiments, or may be combined with another embodiment of this application. This is not specifically limited herein. For ease of description, $TBS_1$ or $TBS_{temp}$ is referred to as a first transport block size, and $TBS_2$ is referred to as a second transport block size. Optionally, the first transport block size may be a transport block size that includes either or both of a quantity of transport block CRC bits and a quantity of code block CRC bits, or may be a transport block size that includes neither a quantity of transport block CRC bits nor a quantity of code block CRC bits.

Solution 1: Determine a second transport block size based on a first transport block size, a quantity of code blocks, a quantity of code block CRC bits, and a quantity of transport block CRC bits.

Step 1: Determine a first transport block size.

Optionally, the first transport block size may be a transport block size used before encoding.

A terminal device first determines the first transport block size according to the foregoing embodiment of this application or in another manner. A determining method is not specifically limited herein.

For example, the terminal device may determine the target transport block size in the following manner. Assuming that the first transport block size is $TBS_{temp}$, the target transport block size may be calculated through the formulas (2), (3), and (4). Assuming that the first transport block size is $TBS_1$, the target transport block size may be calculated through the formula (1).

Step 2: Determine a code block size and the quantity of code blocks based on the first transport block size.

After determining the first transport block size, the terminal device determines an actual transport block size used before transport block CRC bits are added. Specifically, the following solution may be used for processing, and specifically, the actual transport block size may be determined through the following formula (7) or (8).

Optionally, the quantity of code blocks is determined based on the first transport block size, the code block size, and the quantity of code block CRC bits.

Specifically, the quantity of code blocks may be determined by using at least one of the following methods.

Method 1: The first transport block size is a transport block size that includes the transport block CRC bits.

Optionally, the quantity of code blocks is determined based on the first transport block size, the code block size, and the quantity of code block CRC bits.

Specifically, the quantity of code blocks is determined through the following formula (7):

$$C = ceil(TBS_{temp}/(K_{cb} - L_{CB\text{-}CRC})) \quad (7)$$

where C is the quantity of code blocks, *ceil*($\cdot$) represents rounding up, $L_{CB\text{-}CRC}$ is the quantity of code block CRC bits, for example, 24, and $K_{cb}$ is the code block size.

Optionally, the code block size may have two values. For example, the first value of the code block size is 3848, or the second value of the code block size is 8448.

Method 2: The first transport block size is a transport block size that includes no transport block CRC bits.

Optionally, the quantity of code blocks is determined based on the first transport block size, the quantity of transport block CRC bits, the code block size, and the quantity of code block CRC bits.

Specifically, the quantity of code blocks is determined through the following formula (8):

$$C = ceil((TBS_{temp} + L_{TB\text{-}CRC})/(K_{cb} - L_{CB\text{-}CRC})) \quad (8)$$

where $L_{TB\text{-}CRC}$ is the quantity of transport block CRC bits, $L_{CB\text{-}CRC}$ is the quantity of code block CRC bits, and $K_{cb}$ is the code block size.

Optionally, the quantity of transport block CRC bits may be predefined in a protocol, for example, 24 or 16, or may be notified by a network device to the terminal device by using signaling. This is not specifically limited herein. Alternatively, the quantity of transport block CRC bits may have different values based on the transport block size.

Optionally, the quantity of transport block CRC bits may be determined based on the transport block size (either the first transport block size or the second transport block size). For example, if the transport block size is less than or equal to A, the value of the quantity of transport block CRC bits is A1; if the transport block size is greater than A, the quantity of transport block CRC bits is A2, where A is an integer, and A1 and A2 are also integers. Optionally, for example, A1 is 16, and A2 is 24.

Optionally, the quantity of code block CRC bits may be predefined in a protocol, for example, 24 or 16, or may be notified by the network device to the terminal device by using signaling. This is not specifically limited herein. Alternatively, the quantity of code block CRC bits may have different values based on the code block size.

Optionally, the quantity of code block CRC bits is determined based on the code block size. For example, if the code block size is less than or equal to B, the value of the quantity of code block CRC bits is B1; if the code block size is greater than B, the quantity of code block CRC bits is B2, where B is an integer, and B1 and B2 are also integers. Optionally, for example, B1 is 16, and B2 is 24.

Optionally, for example, if the code block size is 3848, the quantity of code block CRC bits is 16; if the code block size is 8448, the quantity of code block CRC bits is 24.

Optionally, the code block size may have two values. For example, the first value of the code block size may be 3848, and the second value of the code block size may be 8448. The code block size may be predefined in a protocol, or notified by the network device. This is not specifically limited herein.

Specifically, the code block size may be determined based on the code rate and the first transport block size (including the quantity of transport block CRC bits).

Specifically, the code block size may be determined based on the following rules.

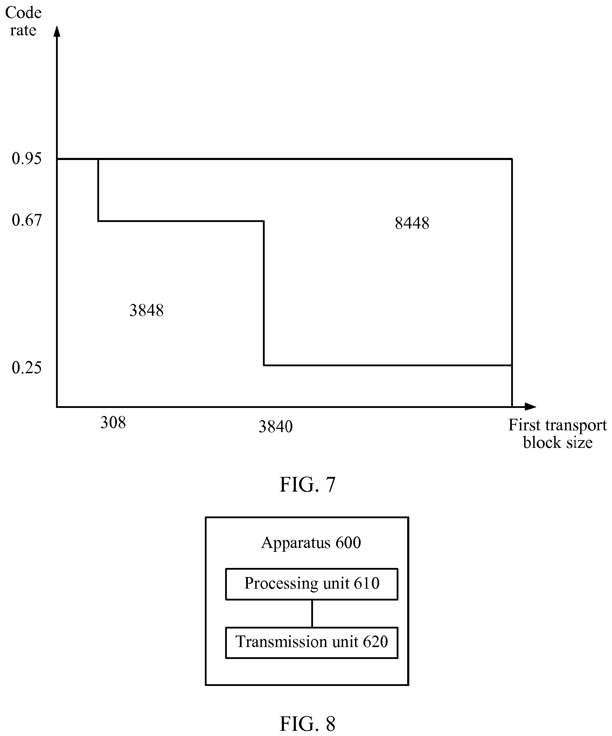

An example in which a code block 1 is 8448 in size, and a code block 2 is 3848 in size is used for description. FIG. 7 is a schematic diagram of a code rate, a transport block size, and a code block size. It is assumed that the current first transport block size includes the quantity of transport block CRC bits, a horizontal coordinate represents the first transport block size, and a vertical coordinate represents the code rate. When the value of the first transport block size is greater than 0 and less than 308 and the code rate is greater than 0 and less than 0.95, the code block size is 3848; when the value of the first transport block size is greater than 308 and less than 3840 and the code rate is greater than 0 and less than 0.67, the code block size is 3848; when the value of the first transport block size is greater than 3840 and the code rate is greater than 0.25 and less than 0.67, the code block size is 8448; and when the value of the first transport block size is greater than 308 and the code rate is greater than 0.67 and less than 0.95, the code block size is 8448.

Step 3: Determine the second transport block size based on the first transport block size, the code block size, and the quantity of code blocks.

Optionally, the second transport block size may be determined based on the first transport block size, the code block size, the quantity of code blocks, the quantity of code block CRC bits, and the quantity of transport block CRC bits.

To ensure that the transport block size of each code block is equal after segmentation of the code block, the second transport block size needs to be an integer multiple of the code block size.

In addition, the second transport block size needs to be a multiple of 8 because data is transmitted in bytes (byte), that is, transmitted in 8 bits (bit) as a basic unit.

Specifically, the second transport block size may be determined through at least one of the following formulas (9) to (11). Specifically, each parameter in the formulas (9) to (12) has a same meaning as that described in the preceding formulas. To avoid repetition, the parameters are not described herein one by one:

$$TBS_2 = ceil\left(\frac{TBS_{temp}}{lcm(C,8)}\right) \cdot lcm(C,8) - L_{TB-CRC}, \text{if } C = 1 \quad (9)$$

$$TBS_2 = ceil\left(\frac{TBS_{temp} + L_{CB-CRC} * C}{lcm(C,8)}\right) \cdot lcm(C,8) - L_{TB-CRC} - L_{CB-CRC} * C \quad , \quad \text{if}$$

$$C > 1 \quad (10)$$

or

$$TBS_2 = ceil\left(\frac{TBS_{temp}}{lcm(C,8)}\right) \cdot lcm(C,8) - L_{TB-CRC} - L_{CB-CRC} * C \quad \text{if} \quad C > 1 \quad (11)$$

$$C = ceil(TBS_{temp}/(K_{cb} - L_{CB\text{-}CRC})) \quad (12)$$

Alternatively, one of the following formulas may be used. The specific formula to be used may be predefined in a protocol, or may be notified by the network device to the terminal device. This is not specifically limited herein.

Method 1: Considering that the transport block size is a multiple of 8 after the code block is segmented, the formulas (9) to (12) are used.

Method 2: Considering that the transport block size is a multiple of 8 before the code block is segmented, the following formulas are used:

$$TBS_2 = ceil\left(\frac{TBS_{temp}}{lcm(C,8)}\right) \cdot lcm(C,8) - L_{TB-CRC}, \text{if} \quad C = 1 \quad (13)$$

$$TBS_2 = ceil\left(\frac{ceil(TBS_{temp}/8)*8 + L_{CB-CRC}*C}{lcm(C,8)}\right) \cdot lcm(C,8) - L_{TB-CRC} \quad , \quad \text{if}$$

$$C > 1 \quad (14)$$

or

$$TBS_2 = ceil\left(\frac{floor(TBS_{temp}/8)*8 + L_{CB-CRC}*C}{lcm(C,8)}\right) \cdot lcm(C,8) - L_{TB-CRC} \quad , \quad \text{if}$$

$$C > 1 \quad (15)$$

$$C = ceil((ceil(TBS_{temp}/8)*8)/(K_{cb} - L_{CB\text{-}CRC})) \quad (16)$$

or

$$C = ceil((floor(TBS_{temp}/8)*8)/(K_{cb} - L_{CB\text{-}CRC})) \quad (17)$$

or

$$C = ceil(TBS_{temp}/(K_{cb} - L_{CB\text{-}CRC})) \quad (18)$$

where $ceil(X/8)*8 = \lceil X/8 \rceil *8$ , $floor(X/8)*8 = \lfloor X/8 \rfloor *8$ , $\lfloor \cdot \rfloor$ represents rounding up, and $\lceil \cdot \rceil$ represents rounding up.

Specifically, the following solution may be used to determine an appropriate TBS. The solution may be an independent embodiment, or may be combined with another embodiment of this application. This is not specifically limited herein.

Optionally, the following provides two methods for determining an appropriate TBS.

Solution 1: A TBS is quantized in the following manner when a base graph that needs to be determined for the TBS calculated through the TBS formula is a base graph 1 (base graph, BG 1), where the base graph is determined based on a base graph selection scheme of a low density parity check (low density parity check, LDPC) code in a protocol. If no predefined table is available, the network device and/or the terminal device may determine the second transport block size based on the following quantization scheme.

Optionally, the base graph may be a code block size. For example, the BG 1 may be 8448 or 3848.

Optionally, the following method may be used: determining whether an input TBS meets a condition that no zero needs to be added (or padded) after segmentation; if the condition is met, the TBS is a final TBS, and the quantization is ended; if the condition is not met, subtracting 1 from the quantity of bits of the TBS, and then performing the determining again. Optionally, if the condition is not met, 1 may be added to the quantity of bits of the TBS. This is not specifically limited herein.

Optionally, no need to add zeros after segmentation may also mean that the transport block sizes of the code blocks are the same after segmentation.

The condition for determining is: It is assumed that B is an input TBS (which may be the first transport block size), and $K_{cb}$ is a maximum code block size corresponding to the BG 1 and may also be referred to as the code block size.

Optionally, B may be a TBS calculated through a formula, for example, $TBS_1$ in the formula (1) or $TBS_{temp}$ in the formula (2).

Optionally, B is a transport block size that includes the quantity of transport block CRC bits.

In the following formula, $B'$ is a transport block size that includes the quantity of transport block CRC bits, or $B'$ includes the quantity of transport block CRC bits and the quantity of code block CRC bits.

If $B \leq K_{cb}$, $L = 0$, where L is the quantity of code block CRC bits, the quantity of code blocks is $C = 1$, and

$$B' = \frac{ceil(B)*8}{8}.$$

Otherwise, if $L = 24$, where an example in which the quantity of code block CRC bits is 24 is used, the quantity of code blocks is $C = \lceil B/(K_{cb} - L) \rceil$, and

$$B' = \frac{ceil(B)*8}{8} + C \cdot L.$$

This is ended if the following conditions are met:

$$K_+ = \left\lceil B'/C \right\rceil;$$

and

$$K_- = \left\lfloor B'/C \right\rfloor.$$

If $K_+ = K_-$, B is a valid block; and B is stored into a file. Otherwise, B is not a valid block and B is deleted. End.

Solution 2: All TBSs that meet a condition are calculated based on the BG 1 of the LDPC in the protocol and put into a table, where the condition is that the TBSs do not need to be padded (Padding) with zeros after segmentation; and then each TBS is calculated through the TBS formula, and it is assumed that the TBS is $TBS_{temp}$; subsequently, a TBS that is less than or equal to $TBS_{temp}$ is found from Table 7 or Table 8 and used as $TBS_2$.

Specifically, $TBS_2$ in the table may be determined by using the following method. Specifically, an example of a process of calculating $TBS_2$ in the table based on the BG 1 is described below.

A circulation from 1 to a maximum TBS (TBSmax) is performed, for example, B = 1; and B ≤ TBSmax; B++.

If $B \leq K_{cb}$, and

$L = 0$,

the quantity of code blocks is: $C = 1$, and

$$B' = \frac{ceil(B) * 8}{8}.$$

Otherwise,

if $L = 24$,

the quantity of code blocks is: $C = \lceil B/(K_{cb} - L) \rceil$, and

$$B' = \frac{ceil(B) * 8}{8} + C \cdot L.$$

This is ended if the following conditions are met:

$$K_+ = \lceil B'/C \rceil; \text{ and}$$

$$K_- = \lfloor B'/C \rfloor.$$

If $K_+ = K_-$,

B is a valid block, and B is stored into a file.

Otherwise, B is not a valid block and B is deleted.

End.

Therefore, in the data transmission method provided in this embodiment of this application, the transport block size is determined for each different layer of data transmitted on the first bandwidth resource, and then the transport block size of each layer is summed up. Because the data actually transmitted on each layer is considered in determining the transport block size, accuracy of determining the transport block size is improved, and reliability of data transmission is improved.

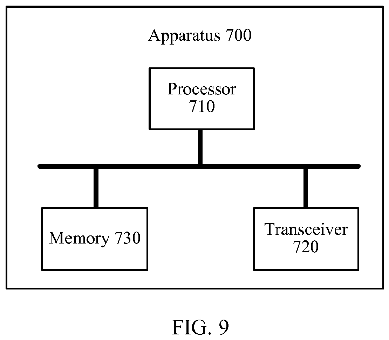

The data transmission method according to the embodiments of this application is described in detail above with reference to FIG. 1 to FIG. 7. The following describes an apparatus according to an embodiment of this application with reference to FIG. 8 and FIG. 9.

FIG. 8 shows a data transmission apparatus 600 according to an embodiment of this application. The apparatus 600 includes:

a processing unit 610, configured to determine a target transport block size based on configuration information, where the configuration information corresponds to a first bandwidth resource, and the configuration information includes at least one of the following: at least one resource element quantity and a modulation and coding scheme MCS table, and the first bandwidth resource is some of resources in a system bandwidth; and
a transmission unit 620, configured to transmit data on the first bandwidth resource based on the target transport block size.

In an optional embodiment, the apparatus further includes a receiving unit, configured to receive the configuration information sent by a network device.

In an optional embodiment, the processing unit 610 is further configured to: determine the configuration information based on at least one of a frequency domain location, a time domain location, and a scheduling manner of the first bandwidth resource and a service type of the data to be transmitted on the first bandwidth resource.

In an optional embodiment, when the configuration information includes a plurality of resource element quantities, the processing unit 610 is specifically configured to: determine a target resource element quantity in the plurality of resource element quantities included in the configuration information; and determine the target transport block size based on the target resource element quantity.

When the configuration information includes a plurality of resource element quantities, the processing unit 610 is further configured to: determine at least one resource element quantity in the plurality of resource element quantities based on uplink control information transmitted on the first bandwidth resource, where the uplink control information includes at least one of a positive acknowledgement, a negative acknowledgement, and channel state information; and the processing unit 610 is specifically configured to: determine the target transport block size based on the at least one resource element quantity.

In particular, the processing unit 610 is specifically configured to: determine a transport block size corresponding to each of the at least one resource element quantity; and perform a summation operation on the transport block size corresponding to each resource element quantity to obtain the target transport block size.

In an optional embodiment, the first bandwidth resource is a bandwidth part BWP.

It should be understood that the apparatus 600 herein is represented in a form of a functional unit. The term "unit" herein may refer to an application-specific integrated circuit (application specific integrated circuit, ASIC), an electronic circuit, a processor (for example, a shared processor, a proprietary processor, or a packet processor) configured to perform one or more software or firmware programs, a combined logic circuit, and/or another appropriate component supporting the described function. In an optional example, a person skilled in the art may understand that the apparatus 600 may be specifically a communications device in the foregoing method embodiment, and the apparatus 600 may be used to perform each process and/or step corresponding to the communications device in the foregoing method embodiment. To avoid repetition, no detailed description is given herein again.

The apparatus 600 exactly corresponds to the communications device in the method embodiment, and an appropriate step is performed by a corresponding unit. For example, the communications unit performs the transmission and receiving steps in the method embodiment, and steps other than the transmission and receiving may be performed by the processing unit. For functions of a specific unit, refer to the corresponding method embodiment, and no detailed description is given herein again.

The communications device in each of the foregoing solutions has a function of implementing the corresponding step performed by the communications device in the foregoing method. The function may be implemented by hardware or by corresponding software executed by hardware. The hardware or software includes one or more modules corresponding to the function. For example, the communications unit may be replaced by a transmitter and/or a receiver, other units such as a processing unit may be replaced by a processor, and the units respectively perform transmission and receiving operations and relevant processing operations in each method embodiment.

FIG. 9 shows another data transmission apparatus 700 according to an embodiment of this application. The apparatus 700 includes a processor 710, a transceiver 720, and a memory 730. The processor 710, the transceiver 720, and the memory 730 can communicate with each other through an internal connection path or a communications bus, the memory 730 is configured to store an instruction, and the processor 710 is configured to execute the instruction stored in the memory 730, to control the transceiver 720 to send a signal and/or receive a signal.

The processor 710 may be a general-purpose central processing unit (central processing unit, CPU), a microprocessor, an application-specific integrated circuit (application-specific integrated circuit, ASIC), or one or more integrated circuits that are configured to control execution of a program in a solution of this application.

The communications bus may include a path for transmitting information between the foregoing components.

The transceiver 720 may be a communications interface, and is configured to communicate with another device or communications network such as the Ethernet, a radio access network (radio access network, RAN), or a wireless local area network (wireless local area networks, WLAN).

The memory 730 may be a read-only memory (read-only memory, ROM) or another type of static storage device that can store static information and a static instruction; or a random access memory (random access memory, RAM) or another type of dynamic storage device that can store information and an instruction; or may be an electrically erasable programmable read-only memory (electrically erasable programmable read-only memory, EEPROM), a compact disc read-only memory (compact disc read-only memory, CD-ROM) or another compact disc storage medium, optical disc storage medium (including a compact disc, a laser disc, an optical disc, a digital versatile disc, a Blu-ray disc, or the like) and magnetic disk storage medium, another magnetic storage device, or any other medium that can be configured to carry or store expected program code in a form of an instruction or a data structure and that is accessible to a computer, but is not limited thereto. The memory may independently exist and be connected to the processor by using the bus. Alternatively, the memory may be integrated with the processor.

The memory 730 is configured to store application program code for performing the solutions of this application, and execution of the application program code is controlled by the processor 710. The processor 710 is configured to execute application code stored in the memory 730, to implement the data transmission method provided in the foregoing embodiments of this application.

Alternatively, optionally, in an embodiment of this application, the processor 710 may also implement the processing-related functions in the transmission method provided in the foregoing embodiments of this application, and the communications interface is responsible for communication with other devices or communications networks. This is not specifically limited in the embodiments of this application.

In specification implementation, in an embodiment, the processor 710 may include one or more CPUs.

In specification implementation, in an embodiment, the apparatus 700 may include a plurality of processors. Each of these processors may be a single-core (single-CPU) processor, or may be a multi-core (multi-CPU) processor. Herein, the processor may be one or more devices, circuits, and/or processing cores used for processing data (for example, a computer program instruction).

The processor 710 is configured to determine a target transport block size based on configuration information, where the configuration information corresponds to a first bandwidth resource, the configuration information includes at least one of the following: at least one resource element quantity and a modulation and coding scheme MCS table, and the first bandwidth resource is some of resources in a system bandwidth; and the transceiver 720 is configured to transmit data on the first bandwidth resource based on the target transport block size.

It should be understood that the apparatus 700 may be specifically the communications device in the foregoing method embodiment, and may be configured to implement each step and/or process corresponding to the communications device in the foregoing method embodiment. Optionally, the memory 730 includes a read-only memory and a random access memory, and provide an instruction and data to the processor. A part of the memory may further include a non-volatile random access memory. For example, the memory may further store information of a device type. The processor 710 may be configured to execute the instruction stored in the memory, and when the processor 710 executes the instruction stored in the memory, the processor 710 is configured to perform each step and/or process corresponding to the terminal device in the foregoing method embodiment.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions arc merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data transmission method (200), comprising:

   determining (S210), by a communications device, a target transport block size based on configuration information, wherein the configuration information corresponds to a first bandwidth resource, and the configuration information comprises at least one of the following: at least one resource element quantity and a modulation and coding scheme MCS table, and the first bandwidth resource is some of resources in a system bandwidth; and
   transmitting (S220), by the communications device, data on the first bandwidth resource based on the target transport block size;
   wherein when the configuration information comprises a plurality of resource element quantities, and the data comprises a plurality layers of data, the method further comprises:

   determining, by the communications device, at least one resource element quantity in the plurality of resource element quantities based on uplink control information transmitted on the first bandwidth resource, wherein the determined at least one resource element quantity is resource element quantities of different layers on the communications device, wherein the uplink control information comprises at least one of a positive acknowledgement, a negative acknowledgement, and channel state information; and
   the determining, by a communications device, a target transport block size based on configuration information comprises:

   determining, by the communications device, the target transport block size based on the at least one resource element quantity;
   wherein the determining, by the communications device, the target transport block size based on the at least one resource element quantity comprises:

   determining, by the communications device, a transport block size corresponding to each of the at least one resource element quantity; and
   performing, by the communications device, a summation operation on the transport block size corresponding to each resource element quantity to obtain the target transport block size.

2. The method (200) according to claim 1, wherein the method (200) further comprises:
   receiving, by the communications device, the configuration information sent by a network device.

3. The method (200) according to claim 1, wherein the method (200) further comprises:
   determining, by the communications device, the configuration information based on at least one of a frequency domain location, a time domain location, and a scheduling manner of the first bandwidth resource and a service type of the data to be transmitted on the first bandwidth resource.

4. The method (200) according to any one of claims 1 to 3, wherein the first bandwidth resource is a bandwidth part BWP.

5. An apparatus (600), comprising:

   a processing unit (610), configured to determine a target transport block size based on configuration information, wherein the configuration information corresponds to a first bandwidth resource, and the configuration information comprises at least one of the following: at least one resource element quantity and a modulation and coding scheme MCS table, and the first bandwidth resource is some of resources in a system bandwidth; and
   a transmission unit (620), configured to transmit data on the first bandwidth resource based on the target transport block size;
   wherein when the configuration information comprises a plurality of resource element quantities, and the data comprises a plurality layers of data, the processing unit (610) is further configured to:

determine at least one resource element quantity in the plurality of resource element quantities based on uplink control information transmitted on the first bandwidth resource, wherein the determined at least one resource element quantity is resource element quantities of different layers on the communications device, wherein the uplink control information comprises at least one of a positive acknowledgement, a negative acknowledgement, and channel state information; and
determine the target transport block size based on the at least one resource element quantity;
wherein the processing unit (610) is further configured to:

determine a transport block size corresponding to each of the at least one resource element quantity; and
perform a summation operation on the transport block size corresponding to each resource element quantity to obtain the target transport block size.

6. The apparatus (600) according to claim 5, wherein the apparatus (600) further comprises:
a receiving unit, configured to receive the configuration information sent by a network device.

7. The apparatus (600) according to claim 5, wherein the processing unit (610) is further configured to:
determine the configuration information based on at least one of a frequency domain location, a time domain location, and a scheduling manner of the first bandwidth resource and a service type of the data to be transmitted on the first bandwidth resource.

8. A computer-readable storage medium, comprising an instruction, wherein when the instruction is run on a computer, the computer is enabled to perform the method according to any one of claims 1 to 4.

9. A computer program product, wherein when the computer program product is run on a computer, the computer is enabled to perform the method according to any one of claims 1 to 4.


**Patentansprüche**

1. Datenübertragungsverfahren (200), das Folgendes umfasst:

Bestimmen (S210), durch eine Kommunikationsvorrichtung, einer Zieltransportblockgröße basierend auf Konfigurationsinformationen, wobei die Konfigurationsinformationen einer ersten Bandbreitenressource entsprechen und die Konfigurationsinformationen Folgendes umfassen: wenigstens eine Ressourcenelementmenge und/oder eine MCS-Tabelle mit einem Modulations- und Codierungsschema, und wobei die erste Bandbreitenressource einige von Ressourcen in einer Systembandbreite ist; und
Übertragen (S220), durch die Kommunikationsvorrichtung, von Daten über die erste Bandbreitenressource basierend auf der Zieltransportblockgröße;
wobei, wenn die Konfigurationsinformationen mehrere Ressourcenelementmengen umfassen und die Daten mehrere Datenschichten umfassen, das Verfahren ferner Folgendes umfasst:

Bestimmen, durch die Kommunikationsvorrichtung, wenigstens einer Ressourcenelementmenge in den mehreren Ressourcenelementmengen basierend auf Uplink-Steuerinformationen, die an die erste Bandbreitenressource übertragen werden, wobei die bestimmte wenigstens eine Ressourcenelementmenge Ressourcenelementmengen verschiedener Schichten auf der Kommunikationsvorrichtung ist, wobei die Uplink-Steuerinformationen eine positive Bestätigung, eine negative Bestätigung und/oder Kanalzustandsinformationen umfassen; und
das Bestimmen, durch eine Kommunikationsvorrichtung, einer Zieltransportblockgröße basierend auf Konfigurationsinformationen Folgendes umfasst:

Bestimmen, durch die Kommunikationsvorrichtung, der Zieltransportblockgröße basierend auf der wenigstens einen Ressourcenelementmenge;
wobei das Bestimmen, durch die Kommunikationsvorrichtung, der Zieltransportblockgröße basierend auf der wenigstens einen Ressourcenelementmenge Folgendes umfasst:

Bestimmen, durch die Kommunikationsvorrichtung, einer Transportblockgröße, die jeder der wenigstens einen Ressourcenelementmenge entspricht; und
Durchführen, durch die Kommunikationsvorrichtung, einer Summierungsoperation an der Transportblockgröße, die jeder Ressourcenelementmenge entspricht, um die Zieltransportblockgröße zu erhalten.

2.  Verfahren (200) nach Anspruch 1, wobei das Verfahren (200) ferner Folgendes umfasst:
Empfangen, durch die Kommunikationsvorrichtung, der Konfigurationsinformationen, die durch eine Netzwerkvorrichtung gesendet werden.

3.  Verfahren (200) nach Anspruch 1, wobei das Verfahren (200) ferner Folgendes umfasst:
Bestimmen, durch die Kommunikationsvorrichtung, der Konfigurationsinformationen basierend auf einem Frequenzbereichsstandort, einem Zeitbereichsstandort und/oder einer Planungsweise der ersten Bandbreitenressource und einer Dienstart der Daten, die auf der ersten Bandbreitenressource übertragen werden sollen.

4.  Verfahren (200) nach einem der Ansprüche 1 bis 3, wobei die erste Bandbreitenressource ein Bandbreitenteil (bandwidth part - BWP) ist.

5.  Einrichtung (600), die Folgendes umfasst:

    eine Verarbeitungseinheit (610), die konfiguriert ist, um eine Zieltransportblockgröße basierend auf Konfigurationsinformationen zu bestimmen, wobei die Konfigurationsinformationen einer ersten Bandbreitenressource entsprechen und die Konfigurationsinformationen Folgendes umfassen: wenigstens eine Ressourcenelementmenge und/oder eine MCS-Tabelle mit einem Modulations- und Codierungsschema, und wobei die erste Bandbreitenressource einige von Ressourcen in einer Systembandbreite ist; und
    eine Übertragungseinheit (620), die konfiguriert ist, um Daten auf der ersten Bandbreitenressource basierend auf der Zieltransportblockgröße zu übertragen;
    wobei, wenn die Konfigurationsinformationen mehrere Ressourcenelementmengen umfassen und die Daten mehrere Datenschichten umfassen, die Verarbeitungseinheit (610) ferner für Folgendes konfiguriert ist:

        Bestimmen wenigstens einer Ressourcenelementmenge in den mehreren Ressourcenelementmengen basierend auf Uplink-Steuerinformationen, die auf der ersten Bandbreitenressource übertragen werden, wobei die bestimmte wenigstens eine Ressourcenelementmenge Ressourcenelementmengen verschiedener Schichten auf der Kommunikationsvorrichtung ist, wobei die Uplink-Steuerinformationen eine positive Bestätigung, eine negative Bestätigung und/oder Kanalzustandsinformationen umfassen; und
        Bestimmen der Zieltransportblockgröße basierend auf der wenigstens einen Ressourcenelementmenge;
        wobei die Verarbeitungseinheit (610) ferner für Folgendes konfiguriert ist:

            Bestimmen einer Transportblockgröße, die jeder der wenigstens einen Ressourcenelementmenge entspricht; und
            Durchführen einer Summierungsoperation an der Transportblockgröße, die jeder Ressourcenelementmenge entspricht, um die Zieltransportblockgröße zu erhalten.

6.  Einrichtung (600) nach Anspruch 5, wobei die Einrichtung (600) ferner Folgendes umfasst:
eine Empfangseinheit, die konfiguriert ist, um Konfigurationsinformationen zu empfangen, die durch eine Netzwerkvorrichtung gesendet werden.

7.  Einrichtung (600) nach Anspruch 5, wobei die Verarbeitungseinheit (610) ferner für Folgendes konfiguriert ist:
Bestimmen der Konfigurationsinformationen basierend auf einem Frequenzbereichsstandort, einem Zeitbereichsstandort und/oder einer Planungsweise der ersten Bandbreitenressource und einer Dienstart der Daten, die auf der ersten Bandbreitenressource übertragen werden sollen.

8.  Computerlesbares Speichermedium, das eine Anweisung umfasst, wobei, wenn die Anweisung auf einem Computer ausgeführt wird, der Computer aktiviert wird, um das Verfahren nach einem der Ansprüche 1 bis 4 durchzuführen.

9.  Computerprogrammprodukt, wobei, wenn das Computerprogrammprodukt auf einem Computer ausgeführt wird, der Computer aktiviert wird, um das Verfahren nach einem der Ansprüche 1 bis 4 durchzuführen.

**Revendications**

1. Procédé de transmission de données (200), comprenant :

la détermination (S210), par un dispositif de communication, d'une taille de bloc de transport cible en fonction d'informations de configuration, les informations de configuration correspondant à une première ressource de bande passante, et les informations de configuration comprenant au moins l'un des éléments suivants : au moins une quantité d'éléments de ressource et une table MCS de schéma de modulation et de codage, et la première ressource de bande passante est une partie des ressources dans une bande passante système ; et la transmission (S220), par le dispositif de communication, de données sur la première ressource de bande passante en fonction de la taille de bloc de transport cible ;
dans lequel, lorsque les informations de configuration comprennent une pluralité de quantités d'éléments de ressource, et que les données comprennent une pluralité de couches de données, le procédé comprend en outre :

la détermination, par le dispositif de communication, d'au moins une quantité d'éléments de ressource dans la pluralité de quantités d'éléments de ressource en fonction d'informations de commande de liaison montante transmises sur la première ressource de bande passante, l'au moins une quantité d'éléments de ressource déterminée étant des quantités d'éléments de ressource de différentes couches sur le dispositif de communication, dans lequel les informations de commande de liaison montante comprennent au moins l'un parmi un accusé de réception positif, un accusé de réception négatif et des informations d'état de canal ; et
la détermination, par un dispositif de communication, d'une taille de bloc de transport cible en fonction d'informations de configuration comprend :

la détermination, par le dispositif de communication, la taille de bloc de transport cible sur la base de l'au moins une quantité d'éléments de ressource ;
dans lequel la détermination, par le dispositif de communication, de la taille de bloc de transport cible sur la base de l'au moins une quantité d'éléments de ressource comprend :

la détermination, par le dispositif de communication, d'une taille de bloc de transport correspondant à chacune de l'au moins une quantité d'éléments de ressource ; et
l'exécution, par le dispositif de communication, d'une opération de sommation sur la taille de bloc de transport correspondant à chaque quantité d'éléments de ressource pour obtenir la taille de bloc de transport cible.

2. Procédé (200) selon la revendication 1, le procédé (200) comprenant en outre :
la réception, par le dispositif de communication, des informations de configuration envoyées par un dispositif réseau.

3. Procédé (200) selon la revendication 1, le procédé (200) comprenant en outre :
la détermination, par le dispositif de communication, des informations de configuration en fonction d'un emplacement de domaine de fréquence, et/ou d'un emplacement de domaine temporel et/ou d'un mode de programmation de la première ressource de bande passante et d'un type de service des données à transmettre sur la première ressource de bande passante.

4. Procédé (200) selon l'une quelconque des revendications 1 à 3, dans lequel la première ressource de bande passante est une partie de bande passante BWP.

5. Appareil (600) comprenant :

une unité de traitement (610), configurée pour déterminer une taille de bloc de transport cible en fonction d'informations de configuration, les informations de configuration correspondant à une première ressource de bande passante, et les informations de configuration comprenant au moins l'un des éléments suivants : au moins une quantité d'éléments de ressource et une table MCS de schéma de modulation et de codage, et la première ressource de bande passante est une partie des ressources dans une bande passante système ; et une unité de transmission (620), configurée pour transmettre des données sur la première ressource de bande passante en fonction de la taille de bloc de transport cible ;
dans lequel lorsque les informations de configuration comprennent une pluralité de quantités d'éléments de ressource, et que les données comprennent une pluralité de couches de données, l'unité de traitement (610) est en outre configurée pour :

déterminer au moins une quantité d'éléments de ressource dans la pluralité de quantités d'éléments de ressource en fonction d'informations de commande de liaison montante transmises sur la première ressource de bande passante, l'au moins une quantité d'éléments de ressource déterminée étant des quantités d'éléments de ressource de différentes couches sur le dispositif de communication, les informations de commande de liaison montante comprennent un accusé de réception positif, et/ou un accusé de réception négatif et/ou des informations d'état de canal ; et

déterminer la taille de bloc de transport cible sur la base de l'au moins une quantité d'éléments de ressource ; l'unité de traitement (610) étant en outre configurée pour :

déterminer une taille de bloc de transport correspondant à chacune de l'au moins une quantité d'éléments de ressource ; et

effectuer une opération de sommation sur la taille de bloc de transport correspondant à chaque quantité d'éléments de ressource pour obtenir la taille de bloc de transport cible.

6. Appareil (600) selon la revendication 5, l'appareil (600) comprenant en outre :
une unité de réception, configurée pour recevoir les informations de configuration envoyées par un dispositif réseau.

7. Appareil (600) selon la revendication 5, dans lequel l'unité de traitement (610) est en outre configurée pour :
déterminer les informations de configuration en fonction d'un emplacement de domaine de fréquence, et/ou d'un emplacement de domaine temporel et/ou d'un mode de programmation de la première ressource de bande passante et d'un type de service des données à transmettre sur la première ressource de bande passante.

8. Support de stockage lisible par ordinateur, comprenant une instruction, l'ordinateur pouvant mettre en œuvre le procédé selon l'une quelconque des revendications 1 à 4.

9. Produit-programme d'ordinateur, l'ordinateur pouvant mettre en œuvre le procédé selon l'une quelconque des revendications 1 à 4 lorsque le produit-programme d'ordinateur est exécuté sur l'ordinateur.

34

100

110　　　　　　　120　　　　　　　　　　　　110

FIG. 1

Frequency
domain

System
bandwidth

Bandwidth resource 2

Bandwidth resource 1

Bandwidth resource 0

FIG. 2

200

| |
|---|
| A communications device determines a target transport block size based on configuration information, where the configuration information corresponds to a first bandwidth resource, and the configuration information includes at least one of the following: at least one resource element quantity, an MCS table, at least one modulation order, and at least one code rate, and the first bandwidth resource is some of resources in a system bandwidth |

S210

| |
|---|
| The communications device transmits data on the first bandwidth resource based on the target transport block size |

S220

**FIG. 3**

300

| |
|---|
| A communications device determines at least one resource element quantity corresponding to a first bandwidth resource |

S310

| |
|---|
| The communications device obtains a modulation order, a code rate, and a physical resource block quantity corresponding to the first bandwidth resource, and determines, based on the modulation order, the code rate, the physical resource block quantity, and the reference resource element quantity, a target transport block size corresponding to the first bandwidth resource |

S320

| |
|---|
| The communications device transmits data on the first bandwidth resource based on the target transport block size |

S330

**FIG. 4**

**EP 3 606 242 B1**

400

```
┌─────────────────────────────────────────────────────┐
│   A communications device determines an MCS table    │──╮ S410
│      corresponding to a first bandwidth resource      │
└─────────────────────────────────────────────────────┘
                          │
┌─────────────────────────────────────────────────────┐
│   The communications device obtains an MCS index value │──╮ S420
└─────────────────────────────────────────────────────┘
                          │
┌─────────────────────────────────────────────────────┐
│ The communications device determines a modulation order or │──╮ S430
│  determines a modulation order and a code rate in the MCS   │
│         table based on the MCS index value             │
└─────────────────────────────────────────────────────┘
                          │
┌─────────────────────────────────────────────────────┐
│  The communications device obtains a reference RE quantity  │
│ and a physical resource block quantity, and determines, based │
│   on the reference RE quantity, the physical resource block  │──╮ S440
│   quantity, the modulation order, and the code rate, a target │
│   transport block size corresponding to the first bandwidth  │
│                        resource                        │
└─────────────────────────────────────────────────────┘
                          │
┌─────────────────────────────────────────────────────┐
│   The communications device transmits data on the first    │──╮ S450
│  bandwidth resource based on the target transport block size │
└─────────────────────────────────────────────────────┘
```

FIG. 5

37

500

```
┌─────────────────────────────────────────────────────────┐
│ Determine a resource element quantity corresponding to  │        S510
│ each of a plurality of layers of data transmitted on a  │  ~
│ first bandwidth resource                                │
└─────────────────────────────────────────────────────────┘
                            │
┌─────────────────────────────────────────────────────────┐
│ Obtain a modulation order, a code rate, and a physical  │        S520
│ resource block quantity, and determine a transport      │  ~
│ block size of each layer based on the determined        │
│ resource element quantity corresponding to each layer   │
└─────────────────────────────────────────────────────────┘
                            │
┌─────────────────────────────────────────────────────────┐
│ Sum the transport block size of each layer to obtain a  │        S530
│ target transport block size of the first bandwidth      │  ~
│ resource                                                │
└─────────────────────────────────────────────────────────┘
                            │
┌─────────────────────────────────────────────────────────┐
│ The communications device transmits data on the first   │        S540
│ bandwidth resource based on the target transport block   │  ~
│ size                                                    │
└─────────────────────────────────────────────────────────┘
```

FIG. 6

FIG. 7

FIG. 8

Apparatus 700

Processor
710

Memory 730

Transceiver
720

FIG. 9

## REFERENCES CITED IN THE DESCRIPTION

### Patent documents cited in the description

- CN 107306453 A
- WO 2017063193 A1
- WO 2014056131 A1
- CN 102196495 A

### Non-patent literature cited in the description

- **HUAWEI et al.** DL/UL resource allocation and TB size determination. *3GPP DRAFT; R1-1717078,* 02 October 2017, vol. RAN WG1 (Prague
- **LG ELECTRONICS.** Discussion on resource allocation and TBS determination. *3GPP DRAFT; R1-1717965,* 03 October 2017, vol. RAN WG1 (Prague
- **ERICSSON.** On MCS/Transport Block Size Determination for PDSCH. *3GPP TSG-RAN WG1 Meeting #89; R1-1709093,* 19 May 2017